(19) Europäisches Patentamt
European Patent Office
Office européen des brevets

(11) Veröffentlichungsnummer: **0 265 828 B1**

(12) # EUROPÄISCHE PATENTSCHRIFT

(45) Veröffentlichungstag der Patentschrift: **08.08.90**

(51) Int. Cl.[5]: **C09B 62/513,** D06P 1/38, C09B 62/09

(21) Anmeldenummer: **87115414.2**

(22) Anmeldetag: **21.10.87**

(54) **Wasserlösliche Disazoverbindungen, Verfahren zu ihrer Herstellung und ihre Verwendung als Farbstoffe.**

(30) Priorität: **25.10.86 DE 3636398**

(43) Veröffentlichungstag der Anmeldung: **04.05.88 Patentblatt 88/18**

(45) Bekanntmachung des Hinweises auf die Patenterteilung: **08.08.90 Patentblatt 90/32**

(84) Benannte Vertragsstaaten: **BE CH DE ES FR GB IT LI**

(56) Entgegenhaltungen:
**FR-A- 2 525 646**
**GB-A- 2 008 144**

**CHEMICAL ABSTRACTS, Band 100, Nr. 22, Mai 1984, Seite 82, Zusammenfassung Nr. 176450u, Columbus, Ohio, US; & JP-A-58 164 651 (MITSUBISHI CHEMICAL INDUSTRIES CO., LTD) 29-09-1983**
**CHEMICAL ABSTRACTS, Band 106, Nr. 14, April 1987, Seite 76, Zusammenfassung Nr. 103756n, Columbus, Ohio, US; & JP-A-61 223 057 (NIPPON KAYAKU CO., LTD) 03-10-1986**

(73) Patentinhaber: **HOECHST AKTIENGESELLSCHAFT, Postfach 80 03 20, D-6230 Frankfurt am Main 80(DE)**

(72) Erfinder: **Schläfer, Ludwig, Dr., Königsberger Strasse 40, D-6233 Kelkheim (Taunus)(DE)**
Erfinder: **Springer, Hartmut, Dr., Am Erdbeerstein 27, D-6240 Königstein/Taunus(DE)**
Erfinder: **Hähnle, Reinhard, Dr., Kastanienweg 7a, D-6240 Königstein/Taunus(DE)**

**EP 0 265 828 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung liegt auf dem technischen Gebiet der Textilfarbstoffe.

Cellulosefasern und Polyesterfasern können derzeit gemeinsam wegen ihrer unterschiedlichen chemischen Natur nicht mit ein und demselben Farbstoff einheitlich und gleichmäßig gefärbt werden. Man ist gezwungen, gemischte Materialien aus diesen beiden Faserarten, wie beispielsweise Mischgewebe, in einer zweistufigen Verfahrensweise zu färben, nämlich zunächst die eine Faserart mit dem für diese geeigneten Farbstoff, sodann die andere Faserart mit dem für diese zweite Faserart geeigneten Farbstoff, jeweils unter Anwendung unterschiedlicher Verfahrensbedingungen. Solch eine Verfahrensweise ist notwendigerweise langwierig und ersatzbedürftig. Man hat deshalb versucht, solche Mischfasermaterialien unter Verwendung eines Farbstoffgemisches aus einem faserreaktiven Farbstoff zur Anfärbung des Cellulosefaseranteils und einem Dispersionsfarbstoff zur Anfärbung des Polyesterfaseranteils zu färben. Diese Verfahrensweise hat jedoch deutliche Nachteile. Der Grund liegt darin, daß faserreaktive Farbstoffe üblicherweise im alkalischen Medium auf der Cellulosefaser fixieren und Dispersionsfarbstoffe üblicherweise, wie in gewissem Umfange auch die Polyesterfaser, gegen Alkali empfindlich sind. Die Folge ist demgemäß, daß bei der Fixierung der faserreaktiven Farbstoffe im alkalischen Milieu die gleichzeitig vorhandenen Dispersionsfarbstoffe und gegebenenfalls auch die Polyesterfasern geschädigt werden können.

Es bestand somit die Aufgabe, diese bisher bekannten Nachteile zu reduzieren oder gar zu beheben, zumal das Färben von Mischgeweben, wie beispielsweise solchen aus Cellulose- und Polyesterfasern, zunehmend an Bedeutung gewinnt. Somit besteht auch verstärkt ein Interesse an Farbstoffen, die das Färben von solchen Mischgeweben problemloser machen, so insbesondere an faserreaktiven Farbstoffen, die im nicht-alkalischen Bereich auf der Cellulosefaser zu fixieren vermögen und zudem bei möglichst niedrigen Färbetemperaturen angewendet werden können.

So hat man mit der deutschen Offenlegungsschrift Nr. 2 634 308 und der US-PS 4 300 902 Farbstoffe zum Färben von solchen Mischfasermaterialien vorgeschlagen, die eine oder mehrere s-Triazinylgruppen mit einem quaternären Stickstoffsubstituenten, wie einen Pyridiniumrest, zum Beispiel der Nicotinsäure, enthalten, und später gemäß der US-Patentschrift Nr. 4 453 945 Farbstoffe gleichen Typs mit speziell dem Nicotinsäurerest als quaternären Stickstoffsubstituenten zum Färben von Cellulosefasern und Cellulose/Polyester-Mischfasern angewendet. Diese Farbstoffe bzw. die hierfür anzuwendenden Färbeverfahren haben jedoch Nachteile. Während für die Farbstoffe der deutschen Offenlegungsschrift Nr. 2 634 308 und der US-PS 4 300 902 Färbetemperaturen von über 150°C erforderlich sind, dagegen das Färbeverfahren der US-Patentschrift Nr. 4 453 945 nach den dortigen Angaben mit Färbetemperaturen unterhalb 150°C auskommt, so zeigen doch die in diesen drei Druckschriften genannten Farbstoffe den schwerwiegenden Nachteil, daß ihre Farbausbeute beim Einsatz nach den Ausziehverfahren auf Cellulosefasermaterialien, wie Baumwolle, stark vom pH-Wert des Färbebades abhängig ist. Dies bedeutet, daß die Tiefe der Ausfärbungen mit diesen bekannten Farbstoffen auf Baumwollfasern bei pH-Werten zwischen 4 und 8 recht unterschiedlich ist, wobei im allgemeinen gilt, daß die Farbtiefe mit steigendem pH-Wert zunimmt und deren Maximum, wie bei allen klassischen faserreaktiven Farbstoffen, im stark alkalischen Bereich, somit oberhalb von pH gleich 9 oder gar 10, liegt. Darüberhinaus ist der Aufbau der Färbungen mit diesen Farbstoffen, d.h. die Relation zwischen eingesetzter Farbstoffmenge und erhaltener Farbausbeute auf der Cellulosefaser (Farbstärke oder Farbtiefe) unzureichend, da die Farbausbeute auf der Faser sich von bestimmten Farbstoffkonzentrationen im Färbebad an mit Erhöhung der Farbstoffmenge zum Zwecke größerer Farbtiefen nicht mehr erhöht.
Diese Mängel haften ebenfalls den in der europäischen Patentanmeldungs-Veröffentlichung Nr. 0 167 219A beschriebenen Farbstoffen, die neben einem pyridiniumsubstituierten s-Triazinylrest eine faserreaktive Gruppe des Vinylsulfonyltyps enthalten, an. Gleiches gilt für die in der US-Patentschrift Nr. 4 323 497 beschriebenen Farbstoffe.

Mit der vorliegenden Erfindung wurden nunmehr neue wasserlösliche Verbindungen gefunden, die der nachstehend genannten und definierten allgemeinen Formel (1) entsprechen, faserreaktive Eigenschaften besitzen und sich nicht nur mit Vorteil im alkalischen Bereich zum Färben von Cellulosefasern anwenden lassen, sondern die überraschenderweise auf Cellulosefasern bereits im schwach sauren und neutralen Bereich, nämlich unter den Bedingungen des sogenannten Hochtemperatur-Neutral-Färbeverfahrens (HTN-Verfahren) bei Temperaturen zwischen 100 und 150°C und einem pH-Wert zwischen 4 und 8 in wäßrigem Medium, somit unter Bedingungen des Färbens von Polyesterfasern, zu fixieren vermögen. Durch die Auffindung der neuen Farbstoffe der allgemeinen Formel (1) eröffnet sich die Möglichkeit, die bisher üblichen und gebräuchlichen Dispersionsfarbstoffe zusammen mit diesen neuen Farbstoffen in einstufige Färbeverfahren zur Färbung von Cellulose/Polyester-Fasergemischen einzusetzen, in welchen beide Faserkomponenten gleichmäßig und echt durch die jeweilige Farbstoffart angefärbt werden und Ton-in-Ton-Färbungen erhalten werden können, wenn der angewendete Dispersionsfarbstoff die gleiche Nuance wie der faserrreaktive Farbstoff besitzt.

Die erfindungsgemäßen faserreaktiven Verbindungen entsprechen der allgemeinen Formel (1)

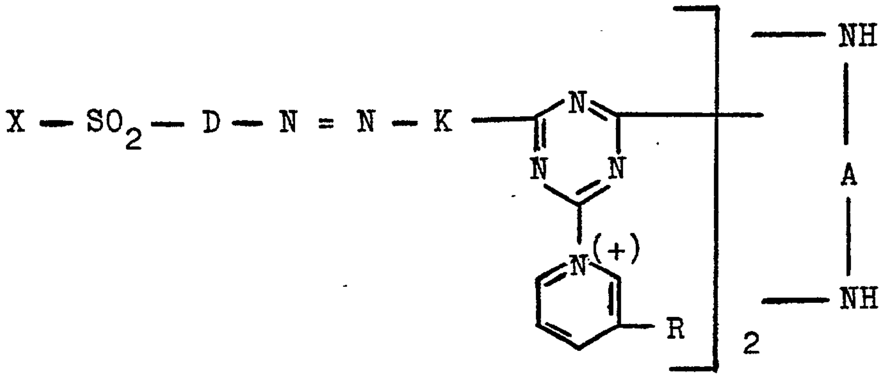

(1)

in welcher die Formelglieder die folgenden Bedeutungen besitzen:
A ist ein Phenylenrest, bevorzugt para-Phenylenrest, der durch 1 oder 2 Substituenten aus der Gruppe Methyl, Ethyl, Methoxy, Chlor und Sulfo, bevorzugt durch eine Sulfogruppe, substituiert sein kann, oder ist ein Rest der allgemeinen Formel (2a)

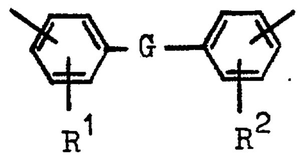

(2a)

in welcher
G eine direkte Bindung oder der Vinylidenrest der Formel -CH=CH- oder der bivalente Harnstoffrest der Formel -NH-CO-NH- ist,
$R^1$ ein Wasserstoffatom, eine Sulfo-, Methyl-, Ethyl-, Methoxy- oder Ethoxygruppe, bevorzugt eine Sulfogruppe, bedeutet und
$R^2$ eine der Bedeutungen von $R^1$ hat und zu $R^1$ gleich oder von $R^1$ verschieden ist;
D ist ein Benzolring, der durch 1 oder 2 Substituenten substituiert sein kann, die aus der Menge von 2 Methylgruppen, 2 Ethylgruppen, 2 Methoxygruppen, 2 Ethoxygruppen, 1 Sulfogruppe, 1 Carboxygruppe, 1 Chloratom und 1 Bromatom ausgewählt sind, oder
D ist ein Naphthalinring, der durch eine Sulfogruppe substituiert sein kann, oder
D ist ein Rest der Formel (2b)

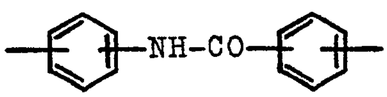

(2b);

K ist als Rest einer Kupplungskomponente ein Amino-naphthol-sulfonsäure-Rest der allgemeinen Formel (3),

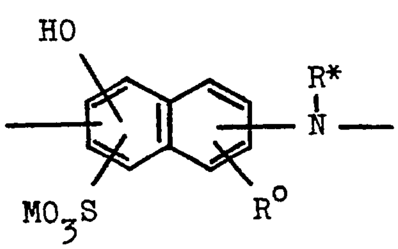

(3),

bevorzugt hiervon ein Rest der allgemeinen Formel (3a), (3b) oder (3c)

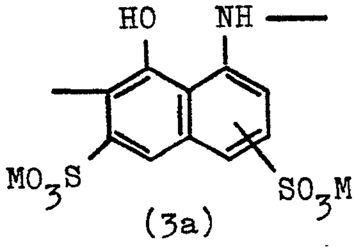

(3a)

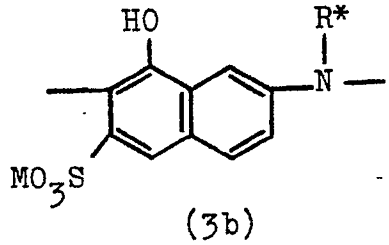

(3b)

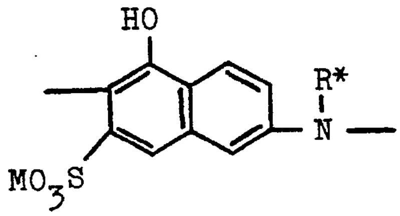

(3c) , oder

K ist ein Rest der allgemeinen Formel (4)

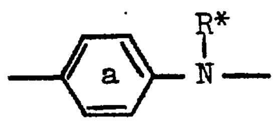

(4)

in welchen
M für ein Wasserstoffatom oder ein Alkalimetall, wie Natrium, Kalium oder Lithium, steht,
$R^0$ ein Wasserstoffatom oder eine Sulfogruppe ist,
die freie Azobindung in Formel (3) ortho-ständig zur Hydroxygruppe steht,
R* eine Ethylgruppe oder bevorzugt ein Wasserstoffatom oder eine Methylgruppe ist und
die eine Gruppe $-SO_3M$ in Formel (3a) in meta- oder para-Stellung zur Gruppe NH steht sowie
der Benzolkern a durch 1 oder 2 Substituenten aus der Gruppe Methyl, Ethyl, Methoxy, Ethoxy, Alkanoylamino von 2 bis 5 C-Atomen, wie Acetylamino, Benzoylamino, Ureido und Chlor substituiert sein kann;
X ist die Vinylgruppe, eine β- Sulfatoethyl- oder die β-Chlorethyl-Gruppe;
R ist die Carboxygruppe oder die Carbonamidgruppe;
die Sulfo-, Sulfato- und Carboxygruppen bilden zum Pyridiniumkation äquivalente Anionen.

Bevorzugt ist von den Resten der allgemeinen Formel (4) ein Rest der allgemeinen Formel (3d)

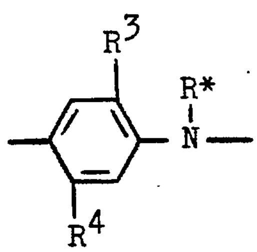

(3d)

in welcher
$R^3$ ein Wasserstoffatom oder die Methyl- oder Methoxygruppe ist und
$R^4$ die Methyl-, Methoxy-, Acetylamino- oder Ureidogruppe bedeutet.

Die jeweils zweifach auftretenden Formelglieder D, K und X sowie R können eine jeweils zueinander gleiche oder eine jeweils voneinander verschiedene Bedeutung besitzen; bevorzugt haben sie die gleiche Bedeutung. Bevorzugt sind somit die erfindungsgemäßen Disazoverbindungen der allgemeinen Formel (1) symmetrisch aufgebaute Verbindungen.

In den Disazoverbindungen der allgemeinen Formel (1) ist X bevorzugt die Vinylgruppe und insbesondere bevorzugt die β-Sulfatoethyl-Gruppe. Der Formelrest A ist bevorzugt der gegebenenfalls durch eine Sulfogruppe substituierte p-Phenylenrest, der 2,2'- oder 3,3'-Disulfo-diphen-4,4'-ylen-Rest oder ein Rest der Formel (2c) oder (2d)

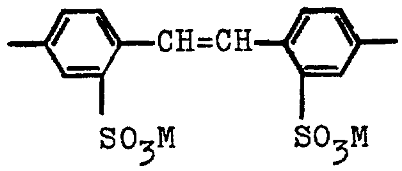

(2c)

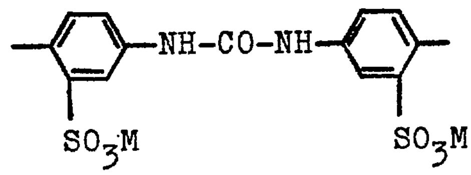

mit M der obengenannten Bedeutung. Der Formelrest D ist bevorzugt ein Benzolring, der durch 1 oder 2 Substituenten substituiert sein kann, die aus der Menge von 2 Methoxygruppen, 1 Methylgruppe, 1 Chloratom und 1 Bromatom ausgewählt sind, oder ist bevorzugt ein Naphthalinring, der durch eine Sulfogruppe substituiert sein kann.

Von den erfindungsgemäßen Disazoverbindungen können insbesondere die in dem Ausführungsbeispiel 7 und in den Tabellenbeispielen 8, 9, 20, 22, 35, 39 und 47 beschriebenen erfindungsgemäßen Disazoverbindungen hervorgehoben werden.

Die erfindungsgemäßen Verbindungen können in Form ihrer freien Säure und in Form ihrer Salze, insbesondere der neutralen Salze, vorliegen. Bevorzugt sind sie in Form ihrer Salze, insbesondere ihrer Alkalisalze. Sie finden bevorzugt in Form dieser Salze ihre Verwendung zum Färben und Bedrucken von hydroxy- und/oder carbonamidgruppenhaltigen Fasermaterialien.

Die vorliegende Erfindung betrifft weiterhin Verfahren zur Herstellung der erfindungsgemäßen Verbindungen. Die erfindungsgemäßen Verbindungen können hergestellt werden, indem man eine Verbindung der allgemeinen Formel (5)

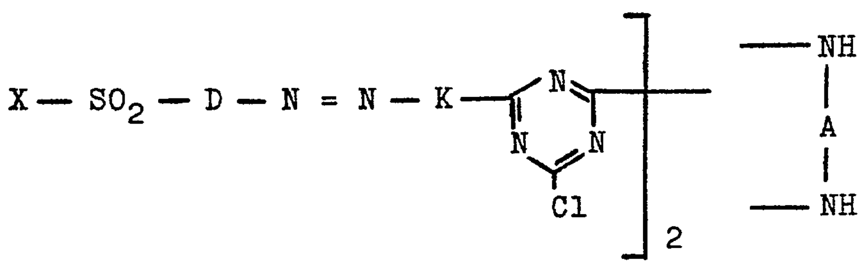

(5)

in welcher A, D, K und X die für Formel (1) angegebenen Bedeutungen haben, mit Nicotinsäure oder Nicotinsäureamid umsetzt. Diese Unsetzung erfolgt analog den für diesen Reaktionstyp üblichen Verfahrensmaßnahmen, wie sie beispielsweise in der bereits anfangs genannten europäischen Patentanmeldungs-Veröffentlichung Nr. 0 167 219 erwähnt sind. Bevorzugt erfolgt die erfindungsgemäße Umsetzung in wäßrigem Medium bei einem pH-Wert zwischen 4 und 6, insbesondere zwischen 4 und 5, und bevorzugt bei einer Temperatur zwischen 60 und 100°C, bevorzugt zwischen 80 und 90°C.

Die Ausgangsverbindungen der allgemeinen Formel (5) sind aus der anfangs bereits erwähnten US-PS 4 323 497 im wesentlichen bekannt oder können analog den dort gemachten Angaben synthetisiert werden.

Des weiteren können die erfindungsgemäßen Verbindungen in erfindungsgemäßer Weise hergestellt werden, indem man eine Verbindung der allgemeinen Formel (6)

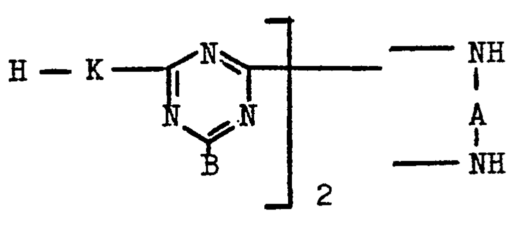

(6)

in welcher A, B und K die oben angegebenen Bedeutungen haben, mit der Diazoniumverbindung eines aromatischen Amins der allgemeinen Formel (7)

$X-SO_2-D-NH_2$ (7)

in welcher D und X die obengenannten Bedeutungen haben, kuppelt. Auch hier erfolgt die Kupplungsreaktion analog den hierfür altbekannten Verfahrensweisen, so beispielsweise in wäßriger Lösung bei einem pH-Wert zwischen 4 und 7 und bei einer Temperatur zwischen 0 und 30°C.

Die Ausgangsverbindungen der allgemeinen Formel (6) lassen sich herstellen, indem man Cyanurchlorid in beliebiger Reihenfolge mit den Aminoverbindungen der allgemeinen Formeln H-K-H und $H_2N$-A-

$NH_2$ mit K bzw. A der oben genannten Bedeutung analog den bekannten Verfahrensweisen zu einer Verbindung der allgemeinen Formel (8)

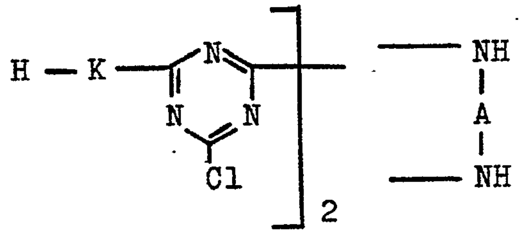

(8)

in welcher A und K die oben genannten Bedeutungen haben, umsetzt. Die Ausgangsverbindungen (8) sind aus der bereits erwähnten US-PS 4 323 497 im wesentlichen bekannt oder können analog den dort gemachten Angaben synthetisiert werden. Anschließend werden die Verbindungen (8) durch Umsetzung mit Nicotinsäure oder Nicotinsäureamid analog den obigen Angaben der Umsetzung der Verbindungen der allgemeinen Formel (5) mit Nicotinsäure oder Nicotinsäureamid in die Ausgangsverbindungen der allgemeinen Formel (6) übergeführt.

Die Abscheidung und Isolierung der erfindungsgemäß hergestellten Verbindungen der allgemeinen Formel (1) aus den Syntheselösungen erfolgt nach allgemein bekannten Methoden, so beispielsweise durch Ausfällen aus dem Reaktionsmedium mittels Elektrolyten oder durch Eindampfen der Reaktionslösung, wie beispielsweise durch Sprühtrocknung, wobei der Syntheselösung zuvor jeweils Puffersubstanzen zugefügt werden können.

Die erfindungsgemäßen Verbindungen haben Farbstoffeigenschaften. Infolge der faserreaktiven Gruppen, die sie besitzen, können sie auch als faserreaktive Farbstoffe Verwendung finden. Sie können nach an und für sich üblichen und bekannten Verfahrensweisen der Applikation und Fixierung von faserreaktiven Farbstoffen auf hydroxygruppenhaltigen und/oder carbonamidgruppenhaltigen Materialien, insbesondere Fasermaterialien, zum Färben (einschließlich Bedrucken) eingesetzt werden, so beispielsweise von Wolle, synthetischen Polyamidfasern, insbesondere jedoch von Cellulosefasermaterialien, wie Baumwolle. Solche Verfahrensweisen sind zahlreich in der Fachliteratur, wie auch Patentliteratur, so beispielsweise in der deutschen Offenlegungsschrift Nr. 3 440 265, beschrieben.

Die vorliegende Erfindung betrifft somit auch die Verwendung der erfindungsgemäßen Verbindungen zum Färben (einschließlich Bedrucken von hydroxygruppenhaltigem und/oder carbonamidgruppenhaltigen Materialien, insbesondere Fasermaterialien, bzw. ein Verfahren zum Färben (einschließlich Bedrucken) von solchen Materialien, bei welchem man eine erfindungsgemäße Verbindung aus bevorzugt wäßriger Lösung auf das Material aufbringt und sie auf dem Material mittels Wärme und/oder mit Hilfe eines säurebindenden Mittels - beim Färben von hydroxygruppenhaltigen Materialien vorzugsweise bei einem pH-Wert zwischen 8 und 11 und bei einer Temperatur zwischen 15 und 120°C, vorzugsweise zwischen 20 und 80°C, - fixiert.

Die erfindungsgemäßen Verbindungen haben zudem den großen Vorteil, wie anfangs bereits erwähnt, daß sie hydroxygruppenhaltige Fasermaterialien, wie Cellulosefasermaterialien, aus wäßriger Flotte, wie bevorzugt im wäßrigen Färbebad nach einem Ausziehverfahren, bereits in einem schwach sauren pH-Bereich von 5 und größer als 5, wie bei einem pH-Wert zwischen 5 und 7, d.h. überraschenderweise in Abwesenheit von alkalisch wirkenden Substanzen, gegebenenfalls jedoch in Gegenwart eines üblichen säurebindenden Puffergemisches zur Einstellung und Einhaltung des pH-Bereiches und ggf. in Gegenwart üblicher Färbehilfsmittel, bei einer Temperatur zwischen 100 und 150°C, bevorzugt bei einer Temperatur von 120 bix 135°C, zu färben vermögen und auf diesen Materialien echt fixieren. Solche Puffer sind bspw. wäßrige Lösungen von Phosphorsäure/Natriumphosphat und Essigsäure/Natriumacetat.

Unter diesen Färbebedingungen der Hochtemperatur-Neutral-Färbeweise, die an und für sich bekannt sind (s. deutsche Auslegeschrift Nr. 2 835 035) und die im wesentlichen den Färbebedingungen des Färbens von Polyesterfasern oder anderen synthetischen Fasern, wie Cellulosetriacetatfasern, mit Dispersionsfarbstoffen entsprechen, ist es möglich, Cellulose-Mischfasermaterial, wie Cellulose-Cellulosetriacetatfaser und Cellulose-Polyacrylnitrilfaserund insbesondere Cellulose-Polyester-Mischfasermaterialien, mit einem üblichen Dispersionsfarbstoff gleichzeitig und zusammen mit einem faserreaktiven Farbstoff, nämlich einer erfindungsgemäßen Azoverbindung, aus einer gemeinsamen wäßrigen Färbeflotte ohne das ansonsten bestehende Risiko der Schädigung des Dispersionsfarbstoffes als auch der synthetischen Faser, wie Polyesterfaser, in einem einstufigen Verfahren mit Vorteil gleichmäßig und echt und gewünschtenfalls Ton-in-Ton zu färben.

Die vorliegende Erfindung betrifft somit auch ein Verfahren zum Färben von Mischfasermaterialien aus Cellulose und synthetischen Fasern, bevorzugt von Cellulose-Polyester-Fasergemischen, mit einem (oder mehreren) Dispersionsfarbstoff(en) und einem oder mehreren erfindungsgemäßen Farbstoff(en) durch Einwirkung dieser Farbstoffe auf das Fasermaterial aus wäßriger Färbeflotte, bevorzugt aus wäßrigem Färbebad, bei einer Temperatur zwischen 100 und 150°C, bevorzugt bei einer Temperatur von 120 bis 135°C, und bei einem pH-Wert zwischen 4 und 8, erforderlichenfalls zwischen 5 bis 7,5, bevorzugt zwischen 5 und 7.

Mit dieser erfindungsgemäßen Färbeweise werden die synthetischen Fasern, wie Polyesterfasern, durch den Dispersionsfarbstoff und die Cellulosefasern durch die faserreaktive erfindungsgemäße Azoverbindung in der gewünschten guten Qualität gefärbt (hierbei erfolgt keine Anfärbung der synthetischen Faser, wie Cellulosetriacetat-und Polyesterfaser, durch die erfindungsgemäßen Azoverbindungen). Die Qualität der Färbung der synthetischen Fasern ist durch den Dispersionsfarbstoff bedingt und entspricht dem Stand der Technik. Überraschenderweise besitzen die Cellulosefasermaterialien, die unter diesen Bedingungen der Färbeweise für Dispersionsfarbstoffe mit den erfindungsgemäßen Azoverbindungen gefärbt wurden, neben einer klaren Nuance beachtliche Echtheitseigenschaften (diese Echtheitseigenschaften sind in jedem Falle vorhanden, wenn die erfindungsgemäßen Azoverbindungen auf den Cellulosefasermaterialien nach den üblichen Verfahrensweisen der Applikation und Fixierung für faserreaktive Farbstoffe im alkalischen Bereich angewendet werden). Von den guten Gebrauchs- und Fabrikationsechtheiten sind insbesondere die guten Lichtechtheiten sowohl der trockenen als auch der feuchten, mit Trinkwasser oder einer alkalischen Schweißlösung imprägnierten Cellulosefärbung, weiterhin von den Naßechtheiten insbesondere die guten Wasch-, Wasser-, Seewasser-, Überfärbe- und Schweißechtheiten sowie die gute Säurelagerbeständigkeit und ebenfalls die guten Plissier-, Bügel-, Reib- und Sublimierechtheiten der Färbungen auf Cellulosefasematerialien hervorzuheben, die mit den erfindungsgemäßen Azoverbindungen nicht nur bei Anwendung der Verfahrensweisen für faserreaktive Farbstoffe im alkalischen Bereich, sondern auch bei Anwendung der Färbeweisen für Dispersionsfarbstoffe erhältlich sind.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säuren geschrieben; im allgemeinen werden sie in Form ihrer Alkalimetallsalze hergestellt und isoliert und in Form dieser Salze zum Färben verwendet. Ebenso können die in den Beispielen, insbesondere Tabellenbeispielen, in Form der freien Säuren genannten Ausgangsverbindungen und Komponenten als solche oder in Form ihrer Salze, vorzugsweise Alkalimetallsalze, wie Natrium- oder Kaliumsalze, in die Synthese eingesetzt werden.

Die in den Beispielen für die erfindungsgemäßen Azoverbindungen im sichtbaren Bereich genannten Absorptionsmaxima ($\lambda_{max}$-Werte) wurden anhand deren Alkalisalze aus wäßriger Lösung ermittelt.

**Beispiele**

Beispiel 1

40,4 Teile der aus dem Beispiel 1 der US-PS 4 323 497 bekannten Disazoverbindung der Formel

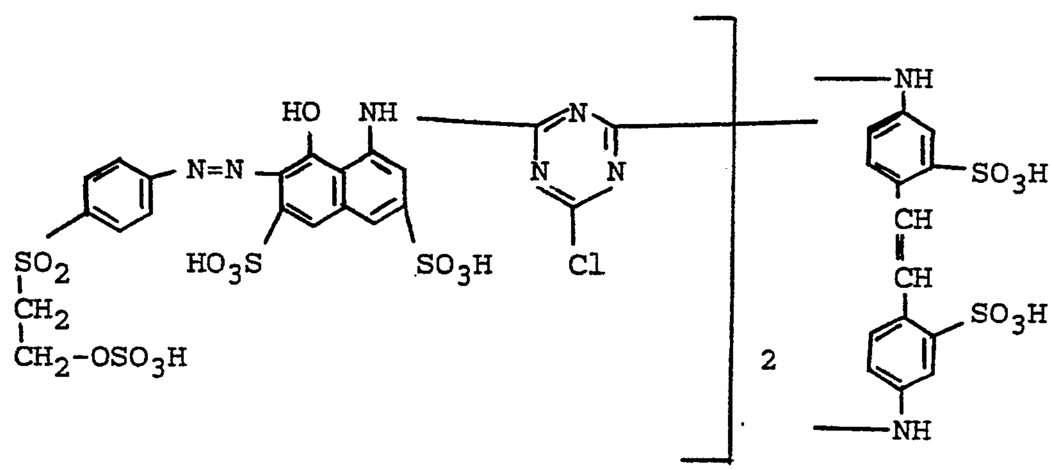

werden in 500 Teilen Wasser gelöst und mit 9,2 Teilen Nicotinsäureamid und 30 Teilen Natriumacetat versetzt; mittels Eisessig wird ein pH-Wert von 4,3 eingestellt und der Reaktionsansatz unter Rühren drei Stunden bei Siedetemperatur gehalten. Anschließend läßt man den Ansatz abkühlen, salzt die gebildete Verbindung mit Kaliumchlorid aus und isoliert und trocknet sie unter reduziertem Druck bei 60 bis 80°C.

Man erhält ein elektrolythaltiges dunkelrotes Pulver mit dem Alkalimetallsalz (vorwiegend Kaliumsalz) der Verbindung der Formel

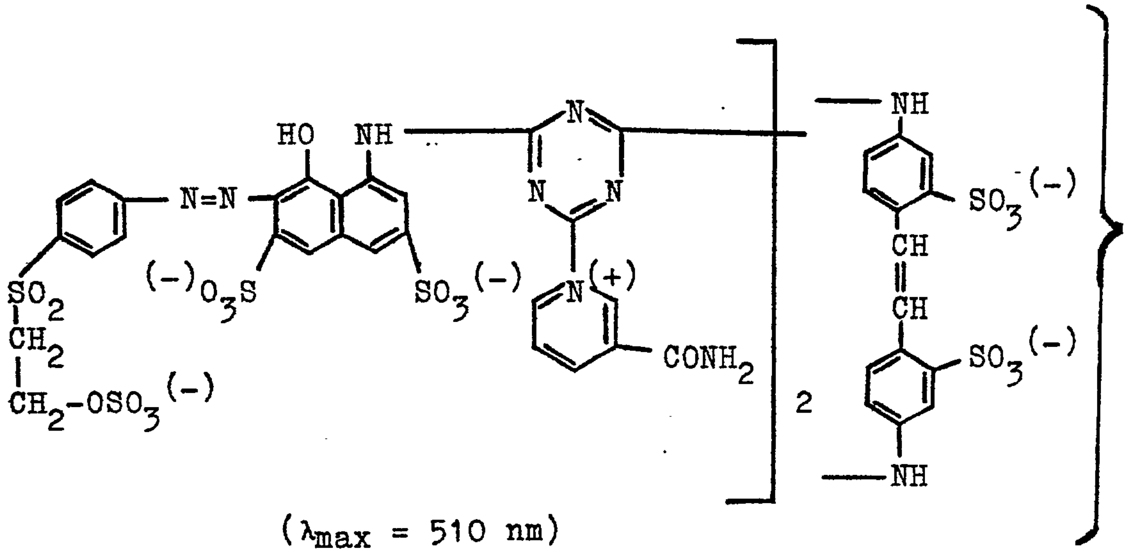

($\lambda_{max}$ = 510 nm)

Diese Verbindung besitzt sehr gute faserreaktive Farbstoffeigenschaften und färbt beispielsweise Wolle oder Cellulosefasermaterialien nach den in der Technik für faserreaktive Farbstoffe üblichen Applikations- und Fixierverfahren. Beispielsweise erhält man auf Baumwolle kräftige blaustichig rote Färbungen und Drucke mit guten Echtheiten (s. Anwendungsbeispiel 2).

Mit Vorteil läßt sich die erfindungsgemäße Verbindung auch zum Färben von Cellulosefasermaterialien unter den Bedingungen des Färbens von Polyesterfasern mit Dispersionsfarbstoffen, d.h. aus wäßriger Lösung bei einem pH-Wert zwischen 5 und 8 und bei einer Temperatur zwischen 110 und 130°C, anwenden (s. Anwendungsbeispiel 1).

Beispiel 2

187,5 Teile der aus Beispiel 4 der US-PS 4 323 497 bekannten Disazoverbindung der Formel

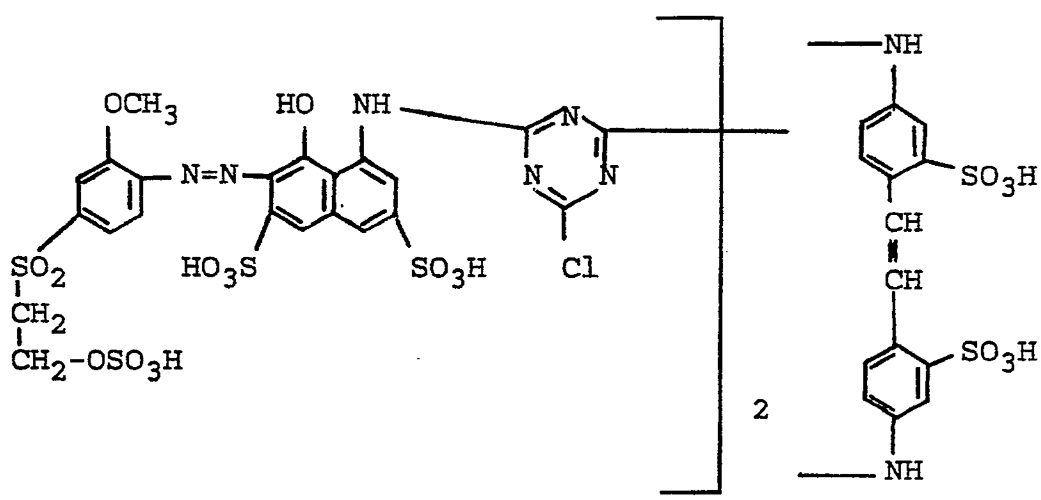

werden in wäßriger Lösung bei einem pH-Wert von 5 bis 7 während einiger Stunden unter Rückflußtemperatur mit 36 Teilen Nicotinsäure umgesetzt. Die gebildete erfindungsgemäße Disazoverbindung wird in üblicher Weise, so durch Aussalzen mit Kaliumchlorid oder durch Eindampfen der Lösung, isoliert. Sie besitzt, in Form der freien Säure geschrieben, die Formel

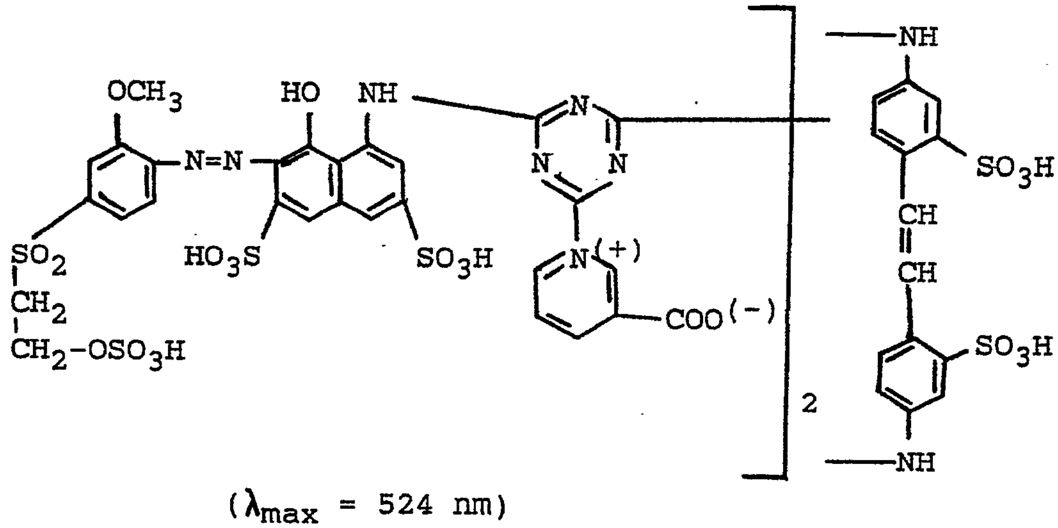

($\lambda_{max}$ = 524 nm)

und zeigt sehr gute faserreaktive Farbstoffeigenschaften. Sie liefert unter alkalischen Fixierbedingungen gemäß den üblichen Färbe- und Druckverfahren für faserreaktive Farbstoffe insbesondere auf Baumwolle farbstarke rotviolette Färbungen und Drucke mit guten Echtheiten.

Ebenso erhält man nach dem sogenannten HTN-Verfahren bei einem pH-Wert zwischen 6 und 7 und einer Temperatur zwischen 120 und 140°C, wie bspw. analog dem Anwendungsbeispiel 1 oder 4, auf Cellulosefasermaterialien farbstarke violette Färbungen, die die gleichen guten Echtheiten aufweisen.

Beispiel 3

168,5 Teile der aus Beispiel 54 der US-PS 4 323 497 bekannten Disazoverbindung der Formel

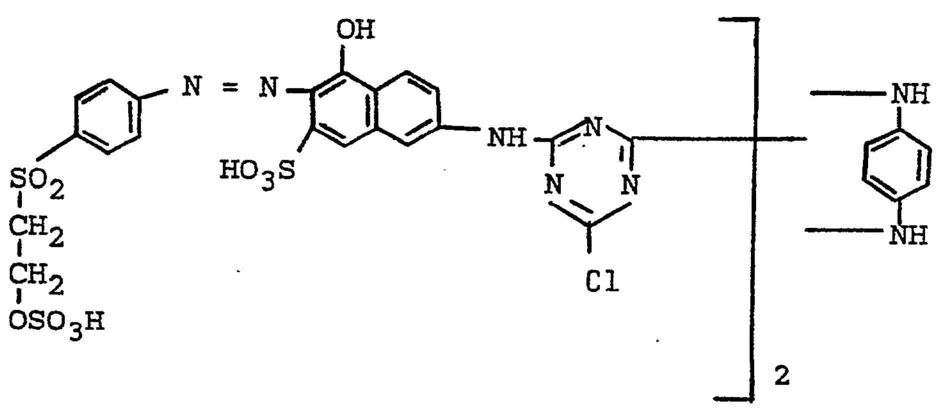

werden in wäßriger Lösung bei einem pH-Wert von 4 bis 5 bei Rückflußtemperatur während mehrerer Stunden mit 36 Teilen Nicotinsäure umgesetzt.

Die gebildete erfindungsgemäße Disazoverbindung wird in üblicher Weise isoliert. Sie besitzt, in Form der freien Säure geschrieben, die Formel

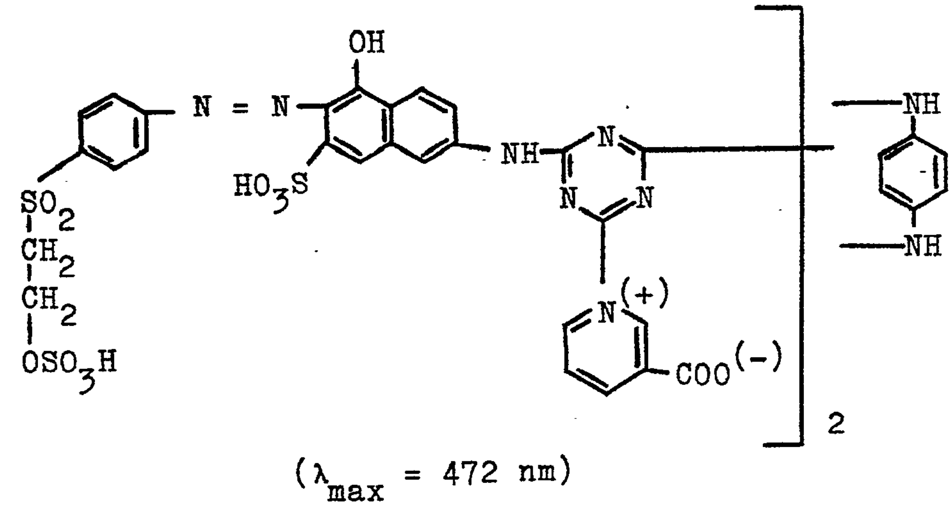

($\lambda_{max}$ = 472 nm)

und zeigt sehr gute faserreaktive Farbstoffeigenschaften. Insbesondere auf Cellulosefasermaterial liefert sie nach den üblichen Applikations- und Fixierverfahren für faserreaktive Farbstoffe im alkalischen Bereich bei Färbetemperaturen von vorzugsweise bis zu 90°C als auch im neutralen bis schwach sauren Färbebad bei Färbetemperaturen zwischen 100 und 140°C farbstarke orange Färbungen mit guten Naß- und Lichtechtheiten.

Beispiel 4

23,9 Teile 2-Amino-5-naphthol-7-sulfonsäure werden in wäßriger Lösung bei einer Temperatur zwischen 0 und 5°C und einem pH-Wert von etwa 2 mit 15,3 Teilen Cyanurchlorid umgesetzt; sodann gibt man dem Reaktionsansatz 5,5 Teile 1,4-Diaminobenzol hinzu und führt die nächste Kondensationsreaktion bei 40 bis 60°C und einem pH-Wert von 4 bis 6 durch. Nach Beendigung der Umsetzung (kein Nachweis von freiem Amin) gibt man 18,3 Teile Nicotinsäureamid hinzu und führt die dritte Kondensations reaktion unter dreistündigem Kochen am Rückfluß bei einem pH-Wert zwischen 4,5 und 5 durch.

Die so erhaltene Verbindung, die der in der Beschreibung genannten allgemeinen Formel (6) entspricht, dient nunmehr als Kupplungkomponente zur Herstellung der erfindungsgemäßen Disazoverbindung, indem man sie direkt in ihrer Syntheselösung mit der wäßrigen Suspension des Diazoniumsalzes aus 31,1 Teilen 2-Methoxy-5-(β-sulfatoethylsulfonyl)-anilin umsetzt. Nach beendigter Kupplungsreaktion isoliert man die erfindungsgemäße Disazoverbindung in üblicher Weise.

Man erhält ein elektrolythaltiges orangerotes Pulver mit dem Alkalimetallsalz der Verbindung der Formel

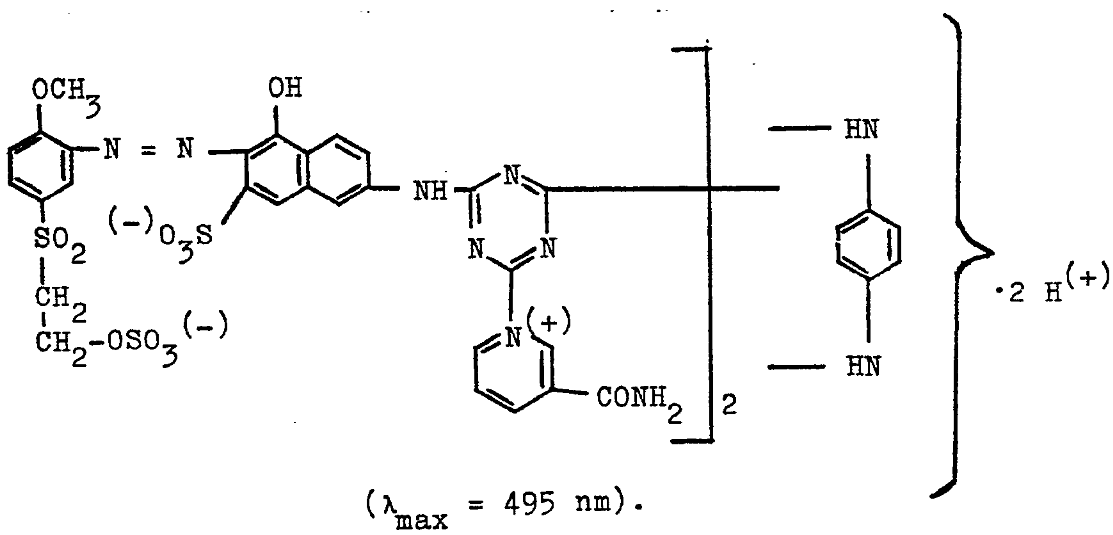

($\lambda_{max}$ = 495 nm).

Diese Verbindung besitzt sehr gute faserreaktive Farbstoffeigenschaften und färbt beispielsweise Wolle oder Cellulosefasermaterialien nach den in der Technik für faserreaktive Farbstoffe üblichen Applikations- und Fixierverfahren. Beispielsweise erhält man analog dem Anwendungsbeispiel 2 auf Baumwolle kräftige rotstichig orange Färbungen und Drucke mit guten Echtheiten.

Mit Vorteil läßt sich die erfindungsgemäße Verbindung auch zum Färben von Cellulosefasermaterialien unter den Bedingungen des Färbens von Polyesterfasern mit Dispersionsfarbstoffen, d.h. aus wäßriger Lösung bei einem pH-Wert zwischen 5 und 8 und bei einer Temperatur zwischen 120 und 150°C, anwenden (analog Anwendungsbeispiel 1).

Beispiel 5

72,2 Teile 4-(β-Sulfatoethylsulfonyl)-2-sulfo-anilin werden in üblicher Weise diazotiert und auf 31 Teile 3-Aminophenylharnstoff gekuppelt. Nach beendeter Kupplung wird die Axoverbindung mittels Natriumchlorid aus dem Reaktionsgemisch ausgesalzen und abfiltriert, in 1000 Teilen Wasser gelöst und bei einer Temperatur unterhalb von 10°C und bei einem pH-Wert zwischen 4 und 5 mit 39 Teilen Cyanurchlorid umgesetzt.
Nach Bildung des Monokondensationsproduktes gibt man in das Reaktionsgemisch eine wäßrige Lösung von 10,8 Teilen 1,4-Diaminobenzol in 100 Teilen Wasser hinzu, stellt den pH-Wert auf 5 bis 5,5 und führt die zweite Kondensationsreaktion bei 40 bis 50°C und unter Einhaltung des pH-Bereiches von 5 bis 5,5 unter mehrstündigem Rühren zu Ende.
Das Reaktionsprodukt wird mittels Natriumchlorid ausgesalzen und abfiltriert, in 1000 Teilen Wasser suspendiert und mit 36 Teilen Nicotinsäureamid versetzt. Diesen Reaktionsansatz rührt man mehrere Stunden bei einer Temperatur zwischen 90 und 100°C und einem pH-Wert zwischen 4 und 5 und salzt sodann die gebildete erfindungsgemäße Disazoverbindung mittels Kaliumchlorid aus dem Reaktionsgemisch aus.

Nach Filtration und Trocknen erhält man das Alkalimetallsalz (vorwiegend Kaliumsalz) der Verbindung der Formel

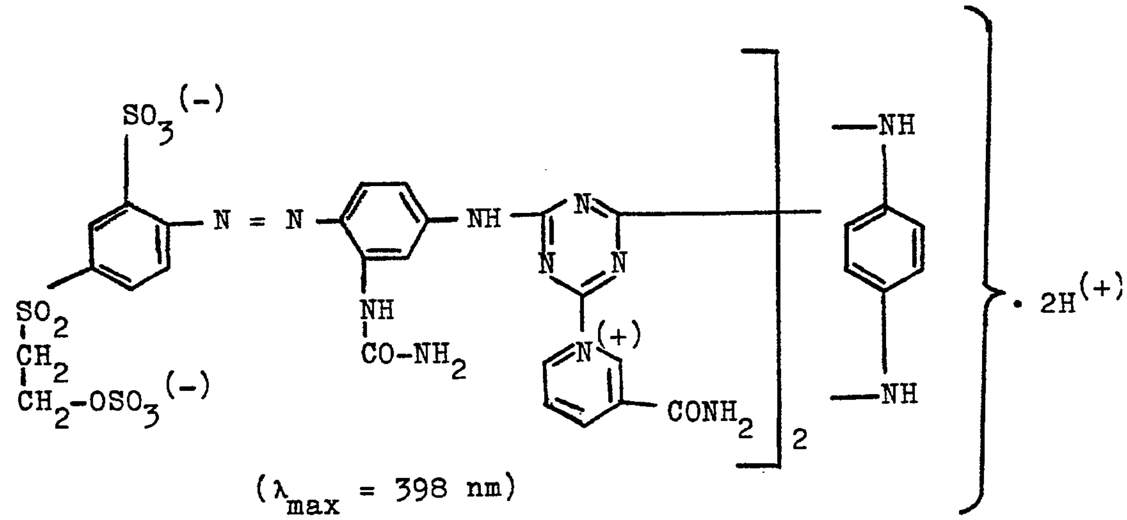

($\lambda_{max}$ = 398 nm)

als elektrolythaltiges (vorwiegend Kaliumchlorid-haltiges) braunes Pulver.

Diese Verbindung besitzt sehr gute faserreaktive Farbstoffeigenschaften und färbt beispielsweise Wolle oder Cellulosefasermaterialien nach den in der Technik für faserreaktive Farbstoffe üblichen Applikations- und Fixierverfahren. Beispielsweise erhält man auf Baumwolle analog Anwendungsbeispiel 2 kräftige Färbungen und Drucke von gelbbrauner Nuance mit guten Echtheiten.

Mit Vorteil läßt sich die erfindungsgemäße Verbindung auch zum Färben von Cellulosefasermaterialien unter den Bedingungen des HTN-Färbens aus wäßriger Lösung bei einem pH-Wert zwischen 5 und 8 und bei einer Temperatur zwischen 110 und 130°C anwenden (bspw. analog Anwendungsbeispiel 1).

Beispiel 6

Man geht von einer Disazoverbindung der Formel

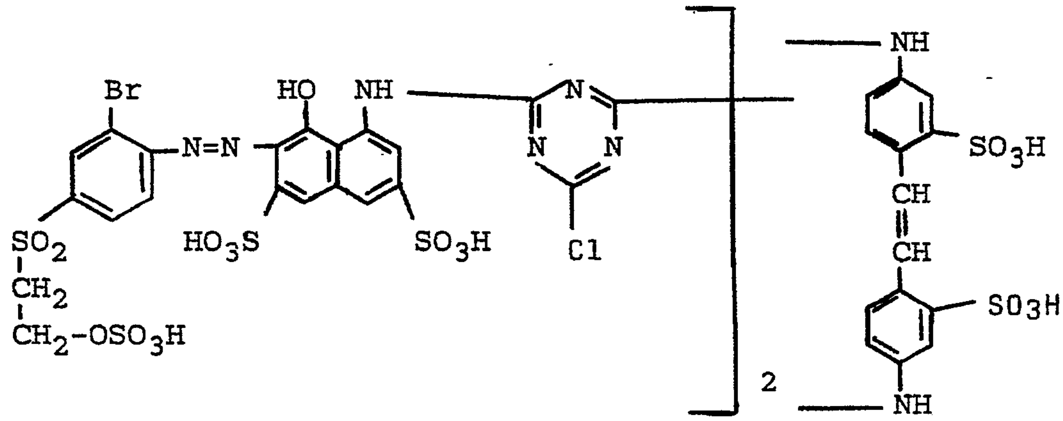

aus, die durch Kupplung des Diazoniumsalzes aus 36 Teilen 2-Brom-4-(β-sulfatoethylsulfonyl)-anilin mit einer Verbindung, die auf üblichem und bekanntem Wege durch Umsetzung von 18,5 Teilen Cyanurchlorid mit 31,9 Teilen 1-Amino-8-naphthol-3,6-disulfonsäure und 20,7 Teilen des Dinatriumsalzes von 4,4'-Diamino-stilben-2,2'-disulfonsäure hergestellt werden kann (s. Beispiel 1 der US-PS 4 323 497), erhältlich ist. Diese Disazo-Ausgangsverbindung wird in ihrer Syntheselösung mit 18,5 Teilen Nicotinsäure bei einem pH-Wert von 4,5 bis 5,0 und bei einer Temperatur von etwa 95°C während 3 Stunden zur erfindungsgemäßen Disazoverbindung umgesetzt, die danach durch Zugabe von Kaliumchlorid ausgesalzen oder durch Eindampfen oder Sprühtrocknen der Reaktionslösung isoliert wird. Sie besitzt, in Form der freien Säure geschrieben, die Formel

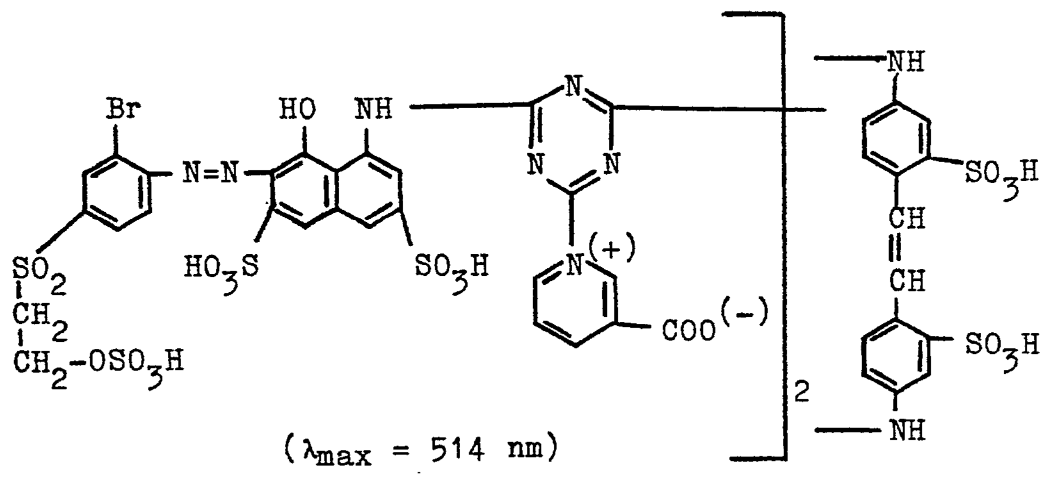

($\lambda_{max}$ = 514 nm)

und zeigt sehr gute faserreaktive Farbstoffeigenschaften. Sie liefert bspw. unter alkalischen Fixierbedingungen gemäß den üblichen Färbe- und Druckverfahren für faserreaktive Farbstoffe auf Baumwolle farbstarke blaustichig rote Färbungen und Drucke mit guten Echtheiten.

Ebenso erhält man nach dem sogenannten HTN-Verfahren bei einem pH-Wert zwischen 6 und 7 und einer Temperatur zwischen 120 und 140°C, wie bspw. analog dem Anwendungsbeispiel 1 oder 4, auf Cellulosefasermaterialien farbstarke violette Färbungen, die die gleichen guten Echtheiten aufweisen.

Beispiel 7

Man setzt gemäß den Angaben des Beispieles 4 15,3 Teile Cyanurchlorid mit 23,9 Teilen 2-Amino-5-naphthol-7- sulfonsäure und sodann mit 5,5 Teilen 1,4-Diaminobenzol und anschließend, anstelle von Nicotinsäureamid gemäß dem Ausführungsbeispiel 4, mit 18 Teilen Nicotinsäure um. Die so erhaltene Kupplungskomponente wird in ihrer wäßrigen Syntheselösung mit der wäßrigen Suspension des Diazoniumsalzes aus 41,1 Teilen 1-Sulfo-6-(β-sulfatoethylsulfonyl)-2-amino-naphthalin versetzt, und die Kupplungsreaktion wird bei einem pH-Wert zwischen 5 und 6 durchgeführt.

Die gebildete erfindungsgemäße Disazoverbindung wird in üblicher Weise isoliert. Sie besitzt, in Form der freien Säure geschrieben, die Formel

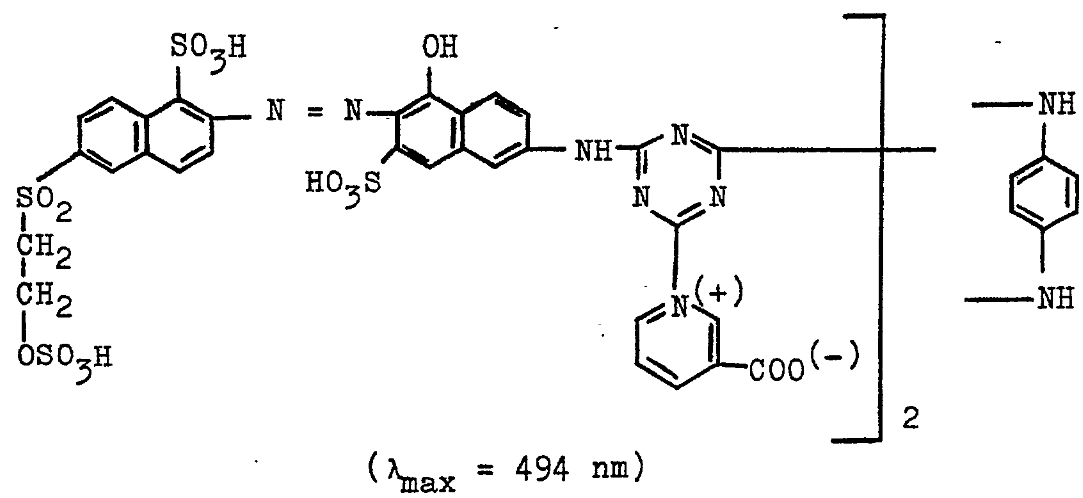

($\lambda_{max}$ = 494 nm)

und zeigt sehr gute faserreaktive Farbstoffeigenschaften. Insbesondere auf Cellulosefasermaterial liefert sie nach den üblichen Applikations- und Fixierverfahren für faserreaktive Farbstoffe im alkalischen Bereich bei Färbetemperaturen von vorzugsweise bis zu 90°C als auch im neutralen bis schwach sauren Färbebad bei Färbetemperaturen zwischen 100 und 140°C farbstarke orange Färbungen mit guten Naß- und Lichtechtheiten.

Beispiele 8 bis 18

In den nachfolgenden Tabellenbeispielen sind weitere erfindungsgemäße Disazoverbindungen mit Hilfe der Formelglieder entsprechend einer allgemeinen Formel (A)

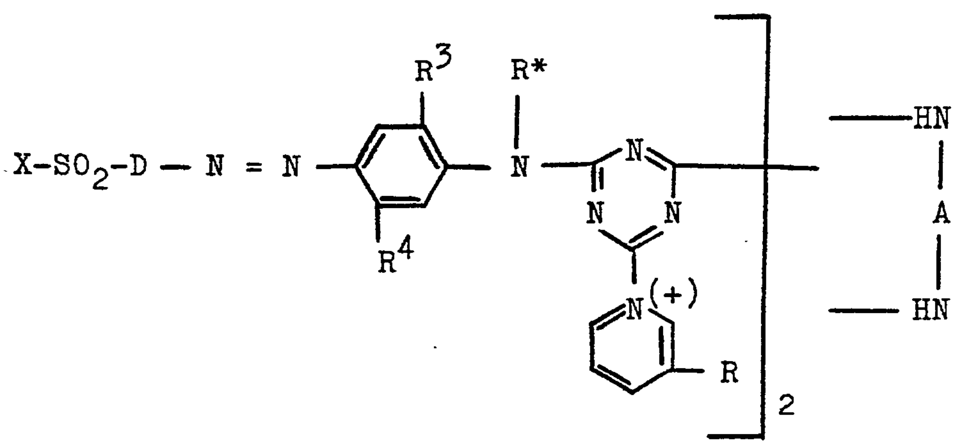

(A)

beschrieben. Die erfindungsgemäßen Verbindungen lassen sich in erfindungsgemäßer Weise, wie beispielsweise analog einem der obigen Ausführungsbeispiele, unter Verwendung der aus den Tabellenbeispielen ersichtlichen Komponenten und Cyanurclorid herstellen. Sie besitzen gute faserreaktive Farbstoffeigenschaften und liefern sowohl in Gegenwart von alkalisch wirkenden Mitteln bei Färbetemperaturen (Fixiertemperaturen) von bix zu 100°C als auch im schwach sauren bis neutralen oder schwach alkalischen Bereich bei Temperaturen zwischen 100 und 140°C auf Cellulosefasermaterialien farbstarke, echte Färbungen und Drucke in dem in dem jeweiligen Tabellenbeispiel angegebenen Farbton.

| Bsp. | Rest A | Gruppe R | Gruppe $X-SO_2-D-$ | Subst. $R^4$ | Subst. $R^3$ | R* | Farbton ($\lambda_{max}$ = ... nm) |
|---|---|---|---|---|---|---|---|
| 8 | 1,4-Phenylen | Carbamoyl | 4-(ß-Sulfatoethylsulfonyl)-phenyl | Methoxy | Methyl | H | orange (360) |
| 9 | dito | dito | dito | Acetylamino | Wasserstoff | H | orange (386) |
| 10 | dito | dito | dito | Wasserstoff | Wasserstoff | $CH_3$ | orange (365) |
| 11 | dito | dito | 2-Brom-4-(ß-sulfatoethylsulfonyl)-phenyl | Methyl | Wasserstoff | $CH_3$ | orange |
| 12 | dito | Carboxy | 4-(ß-Sulfatoethylsulfonyl)-phenyl | Ureido | Wasserstoff | $CH_3$ | orange (375) |
| 13 | dito | Carboxy | 1-Sulfo-6-(ß-sulfatoethylsulfonyl)-naphth-2-yl | Ureido | Wasserstoff | H | orange (388) |
| 14 | 2,2'-Disulfo-stilben-4,4'-ylen | Carboxy | 4-(ß-Sulfatoethylsulfonyl)-phenyl | Ureido | Wasserstoff | H | orange (342) |
| 15 | dito | Carboxy | 2-Methoxy-5-(ß-sulfatoethylsulfonyl)-phenyl | Ureido | Wasserstoff | H | orange (365) |
| 16 | dito | Carbamoyl | dito | Ureido | Wasserstoff | H | orange (394) |
| 17 | 3,3'-Disulfo-diphenyl-4,4'-ylen | Carbamoyl | 4-(ß-Sulfatoethylsulfonyl)-phenyl | Ureido | Wasserstoff | H | orange |
| 18 | dito | Carboxy | dito | Ureido | Wasserstoff | H | orange |

Beispiele 19 bis 37

In den nachfolgenden Tabellenbeispielen sind weitere erfindungsgemäße Disazoverbindungen mit Hilfe der Formelglieder entsprechend einer allgemeinen Formel (B)

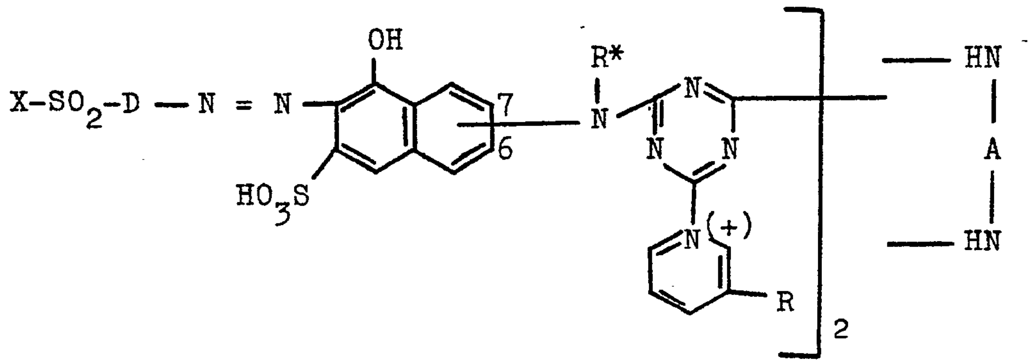

(B)

beschrieben; die darin markierten 6- und 7-Positionen sollen angeben, ob die Bindung des Triazinylamino-Restes in der 6- oder in der 7-Stellung an den Naphtholrest gebunden ist. Die erfindungsgemäßen Verbindungen lassen sich in erfindungsgemäßer Weise, wie beispielsweise analog einem der obigen Ausführungsbeispiele, unter Verwendung der aus den Tabellenbeispielen ersichtlichen Komponenten und Cyanurchlorid herstellen. Sie besitzen gute faserreaktive Farbstoffeigenschaften und liefern sowohl in Gegenwart von alkalisch wirkenden Mitteln bei Färbetemperaturen (Fixiertemperaturen) von bis zu 100°C als auch im schwach sauren bis neutralen oder schwach alkalischen Bereich bei Temperaturen zwischen 100 und 140°C auf Cellulosefasermaterialien farbstarke, echte Färbungen und Drucke in dem in dem jeweiligen Tabellenbeispiel angegebenen Farbton.

| Bsp. | Rest A | Gruppe R | Gruppe $X-SO_2-D-$ | R* | 6- oder 7-Pos. | Farbton ($\lambda_{max}$ = ... nm) |
|---|---|---|---|---|---|---|
| 19 | 1,4-Phenylen | Carboxy | 2-Methoxy-4-(ß-sulfatoethylsulfonyl)-phenyl | H | 7- | rot |
| 20 | dito | Carboxy | 4-(ß-Sulfatoethylsulfonyl)-phenyl | H | 6- | orange (476) |
| 21 | dito | Carboxy | dito | $CH_3$ | 6- | orange (472) |
| 22 | 2-Sulfo-1,4-phenylen | Carboxy | 2-Methoxy-5-(ß-sulfatoethylsulfonyl)-phenyl | $CH_3$ | 6- | rot (492) |
| 23 | dito | Carboxy | 2,5-Dimethoxy-4-(ß-sulfatoethylsulfonyl)-phenyl | H | 6- | blaustichig rot (500) |
| 24 | 1,4-Phenylen | Carbamoyl | 4-(ß-Sulfatoethylsulfonyl)-phenyl | H | 7- | orange (480) |
| 25 | dito | Carbamoyl | dito | H | 6- | orange (470) |
| 26 | dito | Carbamoyl | 1-Sulfo-6-(ß-sulfatoethylsulfonyl)-naphth-2-yl | H | 6- | orange |
| 27 | 2,2'-Disulfostilben-4,4'-ylen | Carbamoyl | dito | H | 6- | rot (492) |
| 28 | dito | Carbamoyl | 4-(ß-Sulfatoethylsulfonyl)-phenyl | $CH_3$ | 6- | orange |
| 29 | dito | Carbamoyl | 2-Methoxy-5-(ß-sulfatoethylsulfonyl)-phenyl | $CH_3$ | 6- | rot |

| Bsp. | Rest A | Gruppe R | Gruppe $X-SO_2-D-$ | R* | 6- oder 7-Pos. | Farbton ($\lambda_{max}$ = ... nm) |
|---|---|---|---|---|---|---|
| 30 | 2,2'-Disulfo-stilben-4,4'-ylen | Carbamoyl | 2,5-Dimethoxy-4-(ß-sulfatoethylsulfonyl)-phenyl | H | 6- | rot |
| 31 | dito | Carbamoyl | 2-Brom-4-(ß-sulfato-ethylsulfonyl)-phenyl | H | 6- | orange |
| 32 | 3,3'-Disulfo-stilben-4,4'-ylen | Carbamoyl | dito | H | 6- | rot |
| 33 | dito | Carboxy | 4-(ß-Sulfatoethyl-sulfonyl)-phenyl | H | 6- | rot |
| 34 | dito | Carboxy | 2-Methyl-5-methoxy-4-(ß-sulfatoethyl-sulfonyl)-phenyl | H | 6- | rot |
| 35 | 2,2'-Disulfo-diphenyl-4,4'-ylen | Carboxy | 4-(ß-Sulfatoethyl-sulfonyl)-phenyl | H | 6- | orange |
| 36 | 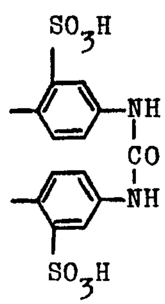 | Carboxy | dito | H | 6- | orange |
| 37 | dito | Carbamoyl | dito | H | 6- | orange |

Beispiele 38 bis 56

In den nachfolgenden Tabellenbeispielen sind weitere erfindungsgemäße Disazoverbindungen mit Hilfe der Formelglieder entsprechend einer allgemeinen Formel (C)

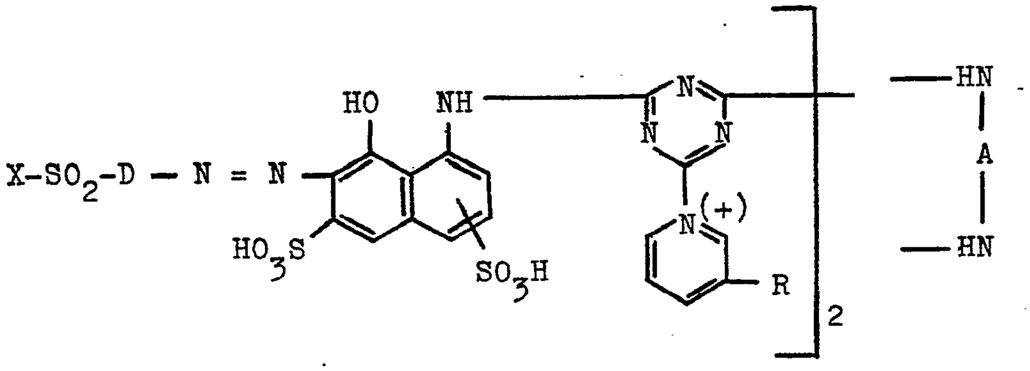

(C)

beschrieben. Die erfindungsgemäßen Verbindungen lassen sich in erfindungsgemäßer Weise, wie beispielsweise analog einem der obigen Ausführungsbeispiele, unter Verwendung der aus den Tabellenbeispielen ersichtlichen Komponenten und Cyanurchlorid herstellen. Sie besitzen gute faserreaktive Farbstoffeigenschaften und liefern sowohl in Gegenwart von alkalisch wirkenden Mitteln bei Färbetemperaturen (Fixiertemperaturen) von bis zu 100°C als auch im schwach sauren bix neutralen oder schwach alkalischen Bereich bei Temperaturen zwischen 100 und 140°C auf Cellulosefasermaterialien farbstarke, echte Färbungen und Drucke in dem in dem jeweiligen Tabellenbeispiel angegebenen Farbton.

| Bsp. | Rest A | Gruppe R | Gruppe $X-SO_2-D-$ | Stellung von $-SO_3H$ zu NH | Farbton ($\lambda_{max}$ = ... nm) |
|---|---|---|---|---|---|
| 38 | 1,4-Phenylen | Carboxy | 4-(ß-Sulfatoethylsulfonyl)-phenyl | meta- | blaustichig rot (510) |
| 39 | dito | Carboxy | 4-Vinylsulfonyl-phenyl | meta- | blaustichig rot |
| 40 | dito | Carboxy | 2-Brom-4-(ß-sulfatoethylsulfonyl)-phenyl | meta- | blaustichig rot (512) |
| 41 | 2-Sulfo-1,4-phenylen | Carboxy | 4-(ß-Sulfatoethylsulfonyl)-phenyl | meta- | blaustichig rot (510) |
| 42 | 1,4-Phenylen | Carbamoyl | dito | meta- | blaustichig rot |
| 43 | dito | Carbamoyl | 2-Methoxy-5-(ß-sulfatoethylsulfonyl)-phenyl | meta- | rotviolett |
| 44 | dito | Carbamoyl | dito | para- | rot |
| 45 | dito | Carbamoyl | 2-Methoxy-5-vinylsulfonyl-phenyl | para- | rot |
| 46 | dito | Carboxy | 4-(ß-Sulfatoethylsulfonyl)-phenyl | para- | rot (490) |
| 47 | 2,2'-Disulfostilben-4,4'-ylen | Carbamoyl | dito | para- | blaustichig rot |
| 48 | dito | Carboxy | dito | meta- | rotviolett |
| 49 | dito | Carboxy | 2-Chlor-5-methoxy-4-(ß-sulfatoethylsulfonyl)-phenyl | meta- | rotviolett (525) |

| Bsp. | Rest A | Gruppe R | Gruppe $X-SO_2-D-$ | Stellung von $-SO_3H$ zu NH | Farbton ($\lambda_{max}$ = ... nm) |
|---|---|---|---|---|---|
| 50 | 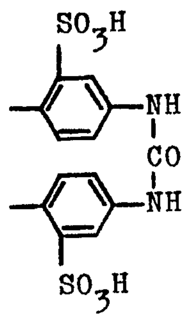 | Carboxy | 4-(ß-Sulfatoethyl-sulfonyl)-phenyl | meta- | blaustichig rot (508) |
| 51 | dito | Carbamoyl | dito | meta- | blaust. rot (508) |
| 52 | dito | Carbamoyl | 6-(ß-Sulfatoethyl-sulfonyl)-naphth-2-yl | meta- | rotviolett |
| 53 | 3,3'-Disulfo-diphenyl-4,4'-ylen | Carbamoyl | 4-(ß-Sulfatoethyl-sulfonyl)-phenyl | meta- | rotviolett |
| 54 | dito | Carboxy | dito | meta- | rotviolett |
| 55 | 2,2'-Disulfo-diphenyl-4,4'-ylen | Carboxy | dito | meta- | rotviolett |
| 56 | dito | Carbamoyl | dito | meta- | rotviolett |

Anwendungsbeispiel 1

50 Teile eines Baumwollgewebes gibt man in ein Färbebad aus 1 Teil der erfindungsgemäßen Disazoverbindung von Beispiel 1 (in Form des neutralen Salzes), 50 Teilen wasserfreiem Natriumsulfat, 800 Teilen Wasser und 200 Teilen einer wäßrigen Pufferlösung, die aus 200 Teilen Wasser und 20 Teilen 85%iger Phosphorsäure zubereitet und mit Natronlauge auf einen pH-Wert von 6 gestellt wird. Das Gewebe wird in dem Bad bei einer Temperatur von 130°C während 90 Minuten unter ständiger Bewegung behandelt. Anschließend wird die erhaltene Färbung durch Spülen mit warmem und mit heißem Wasser, durch Waschen in einem wäßrigen Bad aus 1500 Teilen Wasser und 1,5 Teilen eines nichtionogenen Mittels bei Kochtemperatur während 15 Minuten und durch erneutes Spülen mit warmem Wasser nachbehandelt und getrocknet.

Es wird eine kräftige blaustichig rote Färbung erhalten, die eine gute Lichtechtheit auf trockenem und feuchtem Gewebe, einschließlich einer guten Schweißlichtechtheit, und gute Naßechtheiten, wie eine gute Wasser-, 60°C- und 95°-Wäsche-, Schweiß- und Chlorwasser-Echtheit, desweiteren eine gute Reibechtheit besitzt. Darüberhinaus zeigt die erfindungsgemäße Verbindung einen guten Farbaufbau in diesem Färbeverfahren.

Fährt man das Färbeverfahren nicht bei einem pH-Wert von 6, sondern bei einem pH-Wert von 5, von 7 oder 8 durch, so erhält man gleichgute blaustichig rote Färbungen mit praktisch gleicher Farbstärke wie bei der bei pH 6 hergestellten Färbung.

Anwendungsbeispiel 2

Setzt man die erfindungsgemäße Disazoverbindung des Beispieles 1 zum Färben von Cellulosefasermaterial, wie Baumwollgewebe, nach einem für faserreaktive Farbstoffe üblichen Färbeverfahren ein, wie beispielsweise im Ausziehverfahren bei einer Temperatur von 60°C oder 80°C in Gegenwart eines alkalisch wirkenden Mittels, wie Natriumcarbonat und Natronlauge, und eines Elektrolytsalzes, wie Natriumsulfat, so erhält man ebenfalls sehr farbstarke blaustichig rote Färbungen mit guten Echtheiten, von denen insbesondere die gute Lichtechtheit auf trockenem und feuchtem Gewebe, einschließlich einer guten Schweißlichtechtheit, weiterhin die gute Reibechtheit und die guten Wasser-, Wasch-, Schweiß- und Chlorwasser-Echtheiten hervorgehoben werden können.

Anwendungsbeispiel 3

Man bereitet ein Färbebad aus 80 Teilen Wasser, 0,05 Teilen der erfindungsgemäßen Disazoverbindung des Beispieles 4, 5 Teilen wasserfreiem Natriumsulfat und 20 Teilen einer wäßrigen Pufferlösung, die einen pH-Wert von 6 zu halten vermag, und gibt sodann 0,1 Teile eines vordispergierten Dispersionsfarbstoffes der Colour-Index Nr. 11227 (C.I. Disperse Orange 25) sowie 0,1 Teile eines handelsüblichen und für die Anwendung von Dispersionsfarbstoffen üblichen Dispergiermittels, wie Ligninsulfonsäure, hinzu.

Mit dieser Färbeflotte färbt man 5 Teile eines Polyester/Baumwolle-Mischgewebes (50:50) bei einer Temperatur von 130°C und einem pH-Wert von 6 während 90 Minuten. Danach wird das gefärbte Gewebe aus der Färbeflotte herausgenommen und nachbehandelt und fertiggestellt (bspw. wie im Anwendungsbeispiel 1 beschrieben). Man erhält ein gleichmäßig orange gefärbtes Gewebe, bei dem beide Faseranteile durchgefärbt sind. Die Färbung besitzt die guten Echtheitseigenschaften der Baumwollfärbungen des Beispieles 4 und der Polyesterfärbungen des bekannten Dispersionsfarbstoffes.

Anwendungsbeispiel 4

Man bereitet ein Färbebad aus 59 Teilen Wasser, 1 Teil der erfindungsgemäßen Disazoverbindung des Beispieles 3, 50 Teilen wasserfreiem Natriumsulfat und 5 Teilen Phosphorsäure und stellt das Bad mit Natriumcarbonat auf einen pH-Wert von 4,5 ein. Sodann gibt man 50 Teile eines Baumwollgewebes hinein und führt die Färbung in geschlossener Apparatur unter ständiger Bewegung bei einer Färbetemperatur von 140°C während 30 Minuten durch. Anschließend nimmt man das gefärbte Gewebe heraus und stellt es durch Spülen mit heißem und kaltem Wasser, durch kochende Behandlung während 15 Minuten in einem wäßrigen, eine geringe Menge an einem nichtionogenen Waschmittel enthaltenden Bad, durch erneutes Spülen mit Wasser und Trocknen fertig.

Man erhält ein intensiv orange gefärbtes Baumwollgewebe mit sehr guten Echtheitseigenschaften.

**Patentansprüche für die Vertragsstaaten: BE, CH, DE, FR, GB, IT, LI**

1. Eine Disazoverbindung, die der allgemeinen Formel (1)

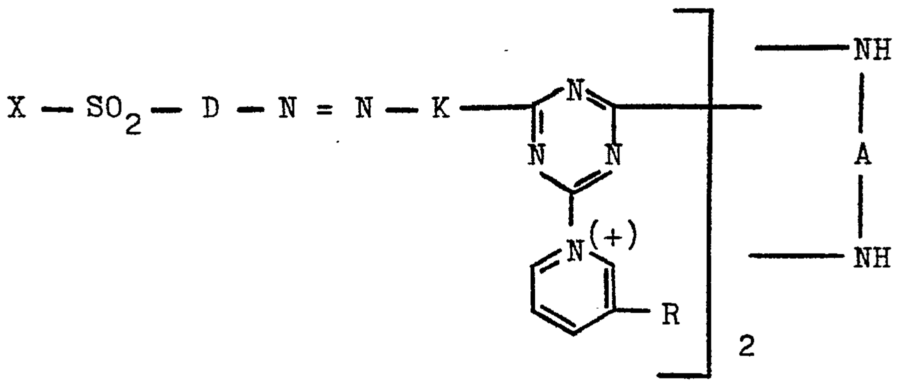

(1)

entspricht, in welcher bedeuten:
A ist ein Phenylenrest, der durch 1 oder 2 Substituenten aus der Gruppe Methyl, Ethyl, Methoxy, Chlor und Sulfo substituiert sein kann, oder
A ist ein Rest der allgemeinen Formel (2a)

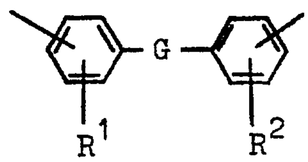

(2a)

in welcher
G eine direkte Bindung oder der Vinylidenrest der Formel -CH=CH- oder der bivalente Harnstoffrest der Formel -NH-CO-NH- ist,
$R^1$ ein Wasserstoffatom, eine Sulfo-, Methyl-, Ethyl-, Methoxy- oder Ethoxygruppe bedeutet und
$R^2$ eine der Bedeutungen von $R^1$ hat und zu $R^1$ gleich oder von $R^1$ verschieden ist;
D ist ein Benzolring, der durch 1 oder 2 Substituenten substituiert sein kann, die aus der Menge von 2 Methylgruppen, 2 Ethylgruppen, 2 Methoxygruppen, 2 Ethoxygruppen, 1 Sulfogruppe, 1 Carboxygruppe, 1 Chloratom und 1 Bromatom ausgewählt sind, oder
D ist ein Naphthalinring, der durch eine Sulfogruppe substituiert sein kann, oder
D ist eine Gruppe der Formel (2b)

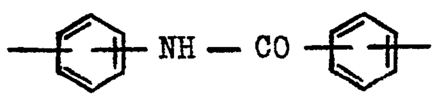

(2b);

K ist als Rest einer Kupplungskomponente ein Aminonaphthol-sulfonsäure-Rest der allgemeinen Formel (3) oder ein Anilinrest der allgemeinen Formel (4)

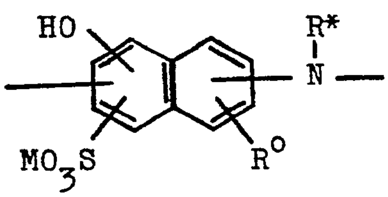

(3),

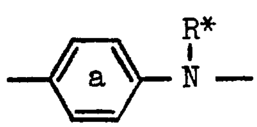

(4)

in welchen
M für ein Wasserstoffatom oder ein Alkalimetall steht,
R ° ein Wasserstoffatom oder eine Sulfogruppe ist, die freie Azobindung in Formel (3) ortho-ständig zur Hydroxygruppe steht,
R* ein Wasserstoffatom oder eine Methylgruppe oder Ethylgruppe ist und
der Benzolkern a durch 1 oder 2 Substituenten aus der Gruppe Methyl, Ethyl, Methoxy, Ethoxy, Alkanoylamino von 2 bis 5 C-Atomen, Benzoylamino, Ureido und Chlor substituiert sein kann;
X ist die Vinylgruppe, eine β-Sulfatoethyl- oder die β-Chlorethyl-Gruppe;
R ist die Carboxygruppe oder die Carbonamidgruppe; die Sulfo-, Sulfato- und Carboxygruppen bilden zum Pyridiniumkation äquivalente Anionen.

2. Disazoverbindung nach Anspruch 1, dadurch gekennzeichnet, daß K ein Rest der allgemeinen Formel (3a) oder (3b)

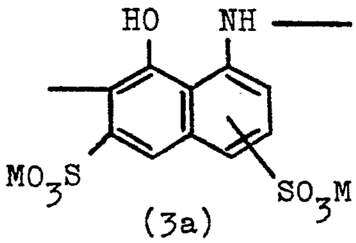
(3a)

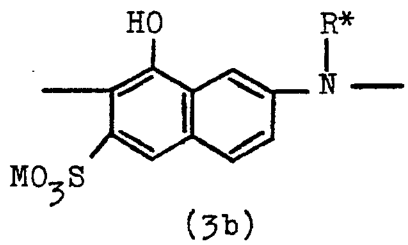
(3b)

ist, in welchen M und R* die in Anspruch 1 genannten Bedeutungen haben und die eine Gruppe in Formel (3a) in meta- oder para-Stellung zur Gruppe NH steht.

3. Disazoverbindung nach Anspruch 1, dadurch gekennzeichnet, daß K ein Rest der allgemeinen Formel (3c)

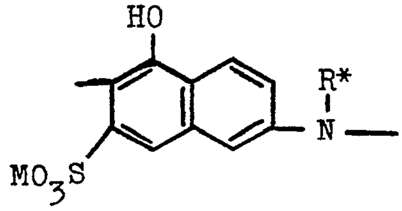
(3c)

ist, in welcher M und R* die in Anspruch 1 genannten Bedeutungen haben.

4. Disazoverbindung nach Anspruch 1, dadurch gekennzeichnet, daß K einen Rest der allgemeinen Formel (4)

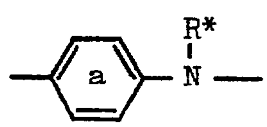
(4)

bedeutet, in welcher R* und a die in Anspruch 1 genannten Bedeutungen haben.

5. Disazoverbindung nach mindestens einem der Ansprüche 1 bis 4, dadurch gekennzeichnet, daß A der para-Phenylenrest oder ein durch eine Sulfogruppe substituierter para-Phenylenrest ist oder den 2,2'- oder 3,3'-Disulfodiphen-4,4'-ylen-Rest oder einen Rest der Formel (2c) oder (2d)

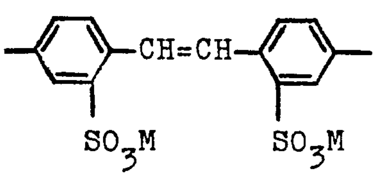
(2c)

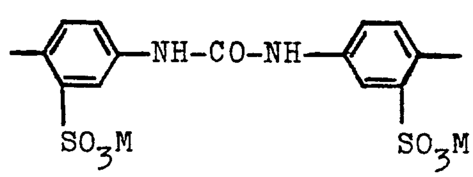
(2d)

in welchen M die in Anspruch 1 genannte Bedeutung besitzt, bedeutet.

6. Verbindung nach einem der Ansprüche 1 und 5, dadurch gekennzeichnet, daß K einen Rest der allgemeinen Formel (3e)

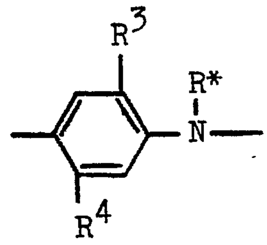

(3e)

bedeutet, in welcher $R^3$ ein Wasserstoffatom oder die Methyl- oder Methoxygruppe ist und $R^4$ die Methyl-, Methoxy-, Acetylamino- oder Ureidogruppe bedeutet.

7. Verbindung nach mindestens einem der Ansprüche 1 bis 6, dadurch gekennzeichnet, daß D einen Benzolring bedeutet, der durch 1 oder 2 Substituenten substituiert sein kann, die aus der Menge von 2 Methoxygruppen, 1 Methylgruppe, 1 Chloratom und 1 Bromatom ausgewählt sind, oder einen Naphthalinring bedeutet, der durch eine Sulfogruppe substituiert sein kann.

8. Verbindung nach mindestens einem der Ansprüche 1 bis 7, dadurch gekennzeichnet, daß X eine β-Sulfatoethyl-Gruppe ist.

9. Verfahren zur Herstellung einer Verbindung von Anspruch 1, dadurch gekennzeichnet, daß man eine Verbindung der allgemeinen Formel (5)

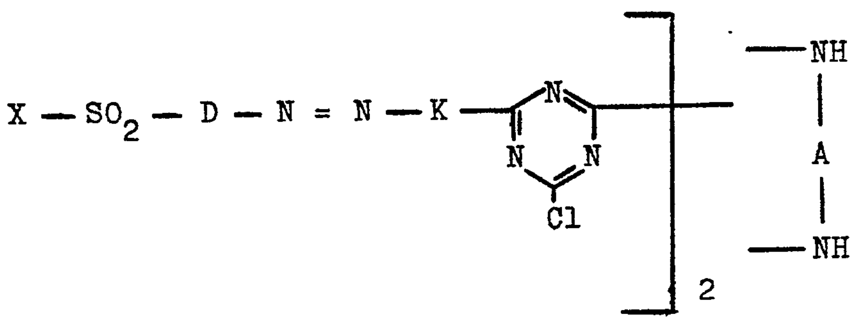

(5)

in welcher A, D, K und X die für Formel (1) in Anspruch 1 angegebenen Bedeutungen haben, mit Nicotinsäure oder Nicotinsäureamid umsetzt, oder daß man eine Verbindung der allgemeinen Formel (6)

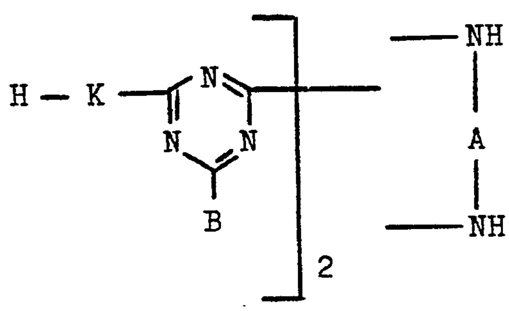

(6)

in welcher A, B und K die in Anspruch 1 angegebenen Bedeutungen haben, mit der Diazoniumverbindung eines aromatischen Amins der allgemeinen Formel (7)

$X - SO_2 - D - NH_2$ (7)

in welcher D und X die in Anspruch 1 angegebenen Bedeutungen haben, kuppelt.

10. Verwendung einer Verbindung der allgemeinen Formel (1) als Farbstoff.

11. Verwendung nach Anspruch 10 zum Färben von hydroxy-und/oder carbonamidgruppenhaltigem Material, vorzugsweise Fasermaterial.

12. Verwendung nach Anspruch 11, dadurch gekennzeichnet, daß das Fasermaterial ein Cellulosefaser-Polyesterfaser-Gemisch oder ein Cellulosefaser-Celluloseacetatfaser-Gemisch ist.

13. Verfahren zum Färben von hydroxygruppenhaltigem Fasermaterial, vorzugsweise Cellulosefasermaterial, dadurch gekennzeichnet, daß man eine Verbindung von Anspruch 1 auf das Material in wäßriger Lösung aufbringt und sie aus der wäßrigen Lösung bei einem pH-Wert zwischen 4 und 8, vorzugsweise bei einem pH-Wert zwischen 5 und 7,5, und bei einer Temperatur zwischen 100 und 150°C auf das Material einwirken läßt und auf dem Material fixiert.

14. Verfahren nach Anspruch 13, dadurch gekennzeichnet, daß man als Fasermaterial ein Cellulosefaser-Polyesterfaser-Gemisch oder ein Cellulosefaser-Cellulosetriacetatfaser-Gemisch einsetzt.

15. Verfahren nach Anspruch 14, dadurch gekennzeichnet, daß man zusätzlich einen Dispersionsfarbstoff einsetzt.

**Patentansprüche für den Vertragsstaat: ES**

1. Verfahren zur Herstellung einer Disazoverbindung, die der allgemeinen Formel (1)

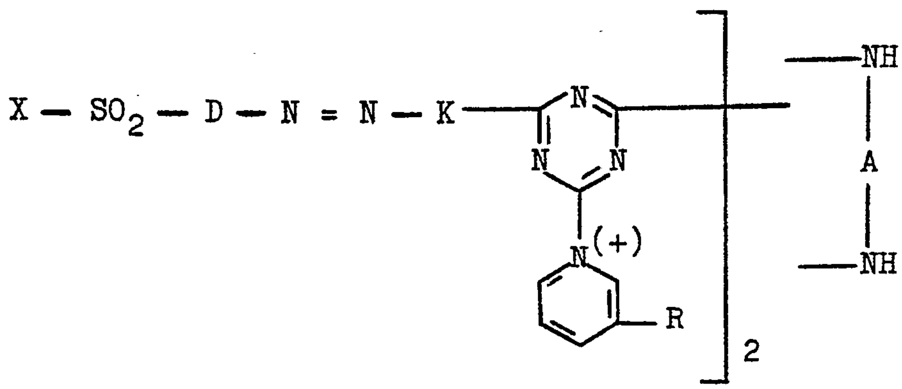

(1)

entspricht, in welcher bedeuten:
A ist ein Phenylenrest, der durch 1 oder 2 Substituenten aus der Gruppe Methyl, Ethyl, Methoxy, Chlor und Sulfo substituiert sein kann, oder
A ist ein Rest der allgemeinen Formel (2a)

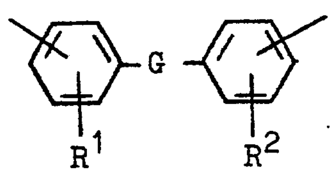

(2a)

in welcher
G eine direkte Bindung oder der Vinylidenrest der Formel -CH=CH- oder der bivalente Harnstoffrest der Formel -NH-CO-NH- ist,
$R^1$ ein Wasserstoffatom, eine Sulfo-, Methyl-, Ethyl-, Methoxy- oder Ethoxygruppe bedeutet und
$R^2$ eine der Bedeutungen von $R^1$ hat und zu $R^1$ gleich oder von $R^1$ verschieden ist;
D ist ein Benzolring, der durch 1 oder 2 Substituenten substituiert sein kann, die aus der Menge von 2 Methylgruppen, 2 Ethylgruppen, 2 Methoxygruppen, 2 Ethoxygruppen, 1 Sulfogruppe, 1 Carboxygruppe, 1 Chloratom und 1 Bromatom ausgewählt sind, oder
D ist ein Naphthalinring, der durch eine Sulfogruppe substituiert sein kann, oder
D ist eine Gruppe der Formel (2b)

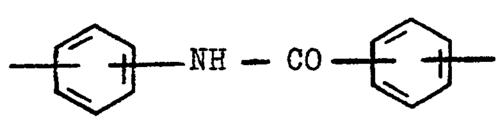

(2b);

K als Rest einer Kupplungskomponente ein Aminonaphthol-sulfonsäure-Rest der allgemeinen Formel (3) oder ein Anilinrest der allgemeinen Formel (4)

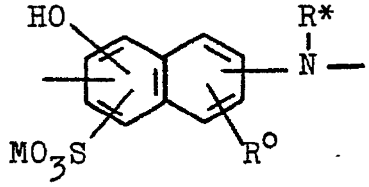

(3),

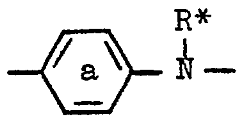

(4)

in welchen
M für ein Wasserstoffatom oder ein Alkalimetall steht,
R ° ein Wasserstoffatom oder eine Sulfogruppe ist, die freie Azobindung in Formel (3) ortho-ständig zur Hydroxygruppe steht,
R* ein Wasserstoffatom oder eine Methylgruppe oder Ethylgruppe ist und
der Benzolkern a durch 1 oder 2 Substituenten aus der Gruppe Methyl, Ethyl, Methoxy, Ethoxy, Alkanoylamino von 2 bis 5 C-Atomen, Benzoylamino, Ureido und Chlor substituiert sein kann;
X ist die Vinylgruppe, eine β-Sulfatoethyl- oder die β-Chlorethyl-Gruppe;
R ist die Carboxygruppe oder die Carbonamidgruppe; die Sulfo-, Sulfato- und Carboxygruppen bilden zum Pyridiniumkation äquivalente Anionen,
dadurch gekennzeichnet, daß man
eine Verbindung der allgemeinen Formel (5)

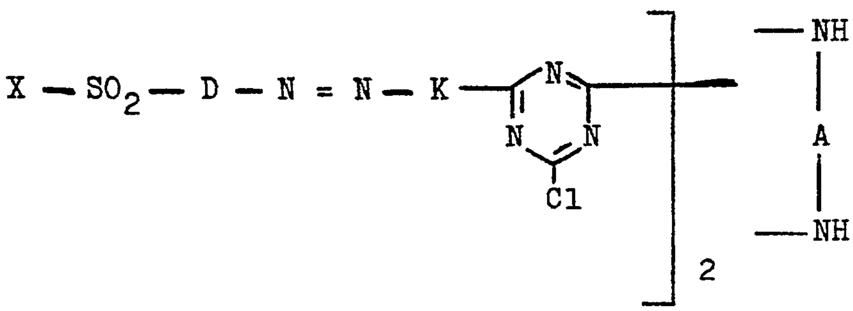

(5)

in welcher A, D, K und X die für Formel (1) oben angegebenen Bedeutungen haben, mit Nicotinsäure oder Nicotinsäureamid umsetzt, oder daß man eine Verbindung der allgemeinen Formel (6)

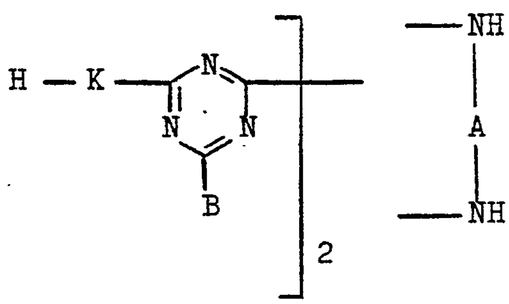

(6)

in welcher A, B und K die oben angegebenen Bedeutungen haben, mit der Diazoniumverbindung eines aromatischen Amins der allgemeinen Formel (7)

$X-SO_2-D-NH_2$ (7)

in welcher D und X die oben angegebenen Bedeutungen haben, kuppelt.

2. Verfahren nach Anspruch 1, dadurch gekennzeichnet, daß K ein Rest der allgemeinen Formel (3a) oder (3b)

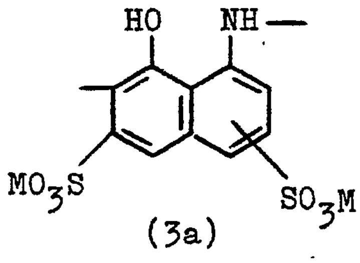

(3a)

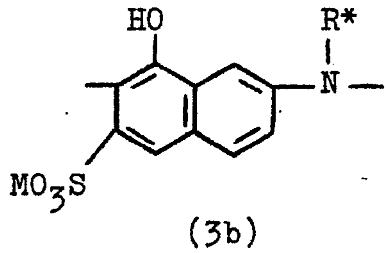

(3b)

ist, in welchen M und R* die in Anspruch 1 genannten Bedeutungen haben und die eine Gruppe in Formel (3a) in meta- oder para-Stellung zur Gruppe NH steht.

3. Verfahren nach Anspruch 1, dadurch gekennzeichnet, daß K ein Rest der allgemeinen Formel (3c)

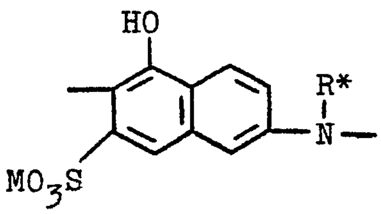

(3c)

ist, in welcher M und R* die in Anspruch 1 genannten Bedeutungen haben.

4. Verfahren nach Anspruch 1, dadurch gekennzeichnet, daß K einen Rest der allgemeinen Formel (4)

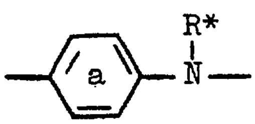

(4)

bedeutet, in welcher R* und a die in Anspruch 1 genannten Bedeutungen haben.

5. Verfahren nach mindestens einem der Ansprüche 1 bis 4, dadurch gekennzeichnet, daß A der para-Phenylenrest oder ein durch eine Sulfogruppe substituierter para-Phenylenrest ist oder den 2,2'- oder 3,3'-Disulfodiphen-4,4'-ylen-Rest oder einen Rest der Formel (2c) oder (2d)

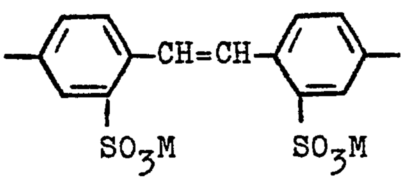

(2c)

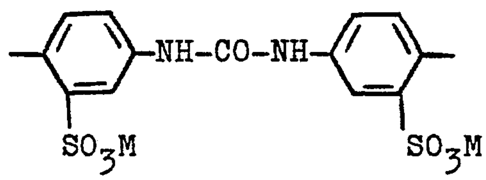

(2d)

in welchen M die in Anspruch 1 genannte Bedeutung besitzt, bedeutet.

6. Verfahren nach einem der Ansprüche 1 und 5, dadurch gekennzeichnet, daß K einen Rest der allgemeinen Formel (3e)

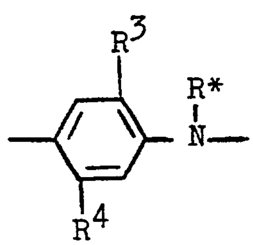

(3e)

bedeutet, in welcher $R^3$ ein Wasserstoffatom oder die Methyl- oder Methoxygruppe ist und $R^4$ die Methyl-, Methoxy-, Acetylamino- oder Ureidogruppe bedeutet.

7. Verfahren nach mindestens einem der Ansprüche 1 bis 6, dadurch gekennzeichnet, daß D einen Benzolring bedeutet, der durch 1 oder 2 Substituenten substituiert sein kann, die aus der Menge von 2

Methoxygruppen, 1 Methylgruppe, 1 Chloratom und 1 Bromatom ausgewählt sind, oder einen Naphthalinring bedeutet, der durch eine Sulfogruppe substituiert sein kann.

8. Verfahren nach mindestens einem der Ansprüche 1 bis 7, dadurch gekennzeichnet, daß X eine β-Sulfatoethyl-Gruppe ist.

9. Verwendung einer Verbindung der allgemeinen Formel (1) oder einer nach mindestens einem der Ansprüche 1 bis 8 hergestellten Disazoverbindung als Farbstoff.

10. Verwendung nach Anspruch 9 zum Färben von hydroxy-und/oder carbonamidgruppenhaltigem Material, vorzugsweise Fasermaterial.

11. Verwendung nach Anspruch 10, dadurch gekenzeichnet, daß das Fasermaterial ein Cellulosefaser-Polyesterfaser-Gemisch oder ein Cellulosefaser-Celluloseacetatfaser-Gemisch ist.

12. Verfahren zum Färben von hydroxygruppenhaltigem Fasermaterial, vorzugsweise Cellulosefasermaterial, dadurch gekennzeichnet, daß man eine Disazoverbindung von Anspruch 1 oder eine nach mindestens einem der Ansprüche 1 bis 8 hergestellte Disazoverbindung auf das Material in wäßriger Lösung aufbringt und sie aus der wäßrigen Lösung bei einem pH-Wert zwischen 4 und 8, vorzugsweise bei einem pH-Wert zwischen 5 und 7,5, und bei einer Temperatur zwischen 100 und 150°C auf das Material einwirken läßt und auf dem Material fixiert.

13. Verfahren nach Anspruch 12, dadurch gekennzeichnet, daß man als Fasermaterial ein Cellulosefaser-Polyesterfaser-Gemisch oder ein Cellulosefaser-Cellulosetriacetatfaser-Gemisch einsetzt.

14. Verfahren nach Anspruch 13, dadurch gekennzeichnet, daß man zusätzlich einen Dispersionsfarbstoff einsetzt.

**Claims for the Contracting States: BE, CH, DE, FR, GB, IT, LI**

1. A disazo compound which conforms to the general formula (1),

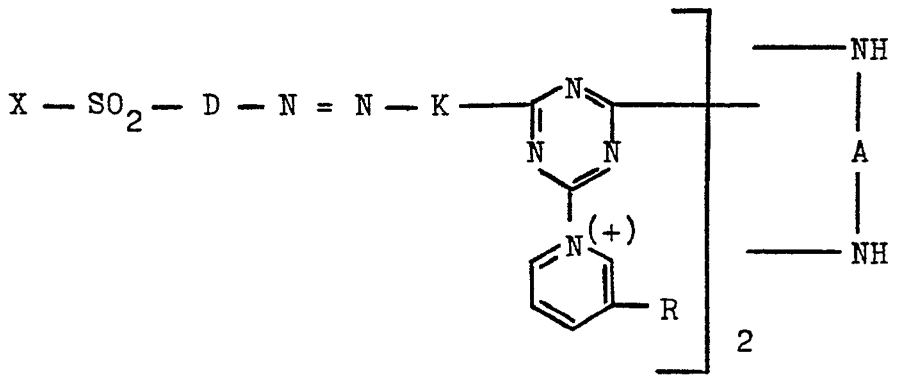

(1)

in which
A is a phenylene radical which can be substituted by 1 or 2 substituents from the group consisting of methyl, ethyl, methoxy, chlorine and sulfo, or
A is a radical of the general formula (2a)

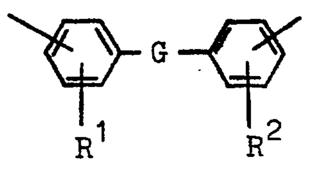

(2a)

in which
G is a direct bond or a vinylidene radical of the formula –CH=CH– or the bivalent urea radical of the formula –NH–CO–NH–,
$R^1$ denotes a hydrogen atom or a sulfo, methyl, ethyl, methoxy or ethoxy group and
$R^2$ has one of the meanings of $R^1$ and is identical to $R^1$ or different from $R^1$;
D is a benzene ring which can be substituted by 1 or 2 substituents which are selected from the set consisting of 2 methyl groups, 2 ethyl groups, 2 methoxy groups, 2 ethoxy groups, 1 sulfo group, 1 carboxyl group, 1 chlorine atom and 1 bromine atom, or
D is a naphthalene ring which can be substituted by a sulfo group, or
D is a group of the formula (2b)

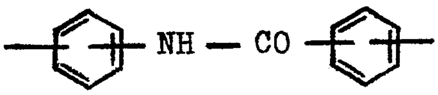

(2b);

K is a radical of a coupling component, is an aminonaphtholsulfonic acid radical of the general formula (3) or an aniline radical of the general formula (4)

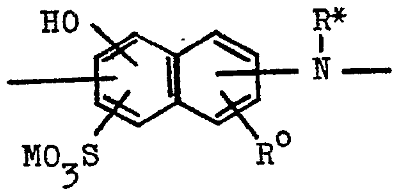

(3),

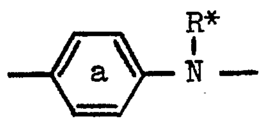

(4)

in which
M stands for a hydrogen atom or an alkali metal,
R° is a hydrogen atom or a sulfo group,
the free azo bond in the formula (3) is ortho to the hydroxyl group,
R* is a hydrogen atom or a methyl group or an ethyl group and
the benzene nucleus a can be substituted by 1 or 2 substituents from the group consisting of methyl, ethyl, methoxy, ethoxy, alkanoylamino of 2 to 5 carbon atoms, benzoylamino, ureido and chlorine;
X is a vinyl group, a β-sulfatoethyl or a β-chloro-ethyl group;
R is a carboxyl group or a carboxamido group;
the sulfo, sulfato and carboxyl groups form anions equivalent to the pyridinium cation.

2. A disazo compound as claimed in claim 1, wherein K is a radical of the general formula (3a) or (3b)

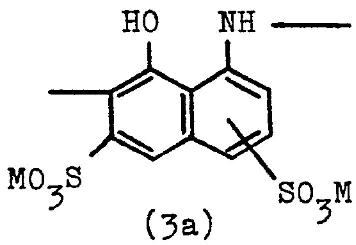

(3a)

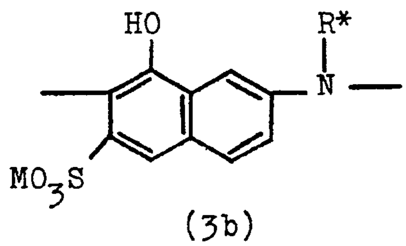

(3b)

in which M and R* have the meanings mentioned in claim 1 and the group in the formula (3a) is meta or para to the NH group.

3. A disazo compound as claimed in claim 1, wherein K is a radical of the general formula (3c)

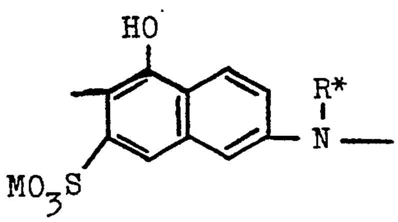

(3c)

in which M and R* have the meanings mentioned in claim 1.

4. A disazo compound as claimed in claim 1, wherein K is a radical of the general formula (4)

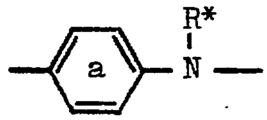
(4)

in which R* and a have the meanings mentioned in claim 1.

5. A disazo compound as claimed in at least one of claims 1 to 4, wherein A is a para-phenylene radical or a sulfo-substituted para-phenylene radical or a 2,2'- or 3,3'-disulfodiiphen-4,4'-ylene radical or a radical of the formula (2c) or (2d)

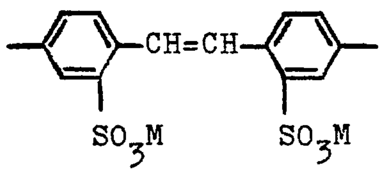
(2c)

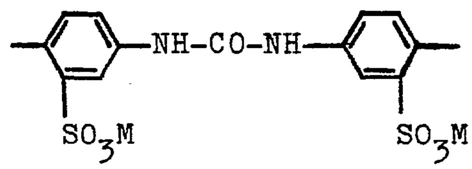
(2d)

in which M has the meaning mentioned in claim 1.

6. A compound as claimed in any one of claims 1 to 5, wherein K denotes a radical of the general formula (3e)

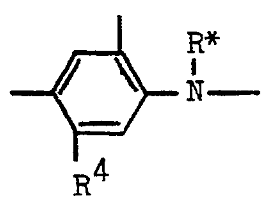
(3e)

in which $R^3$ is hydrogen atom or a methyl or methoxy group and $R^4$ denotes a methyl, methoxy, acetylamino or ureido group.

7. A compound as claimed in at least one of claims 1 to 6, wherein D denotes a benzene ring which can be substituted by 1 or 2 substituents selected from the set consisting of 2 methoxy groups, 1 methyl group, 1 chlorine atom and 1 bromine atom, or denotes a naphthalene ring which can be substituted by a sulfo group.

8. A compound as claimed in at least one of claims 1 to 7, wherein X is a β-sulfatoethyl group.

9. A process for preparing a compound of claim 1, which comprises reacting a compound of the general formula (5)

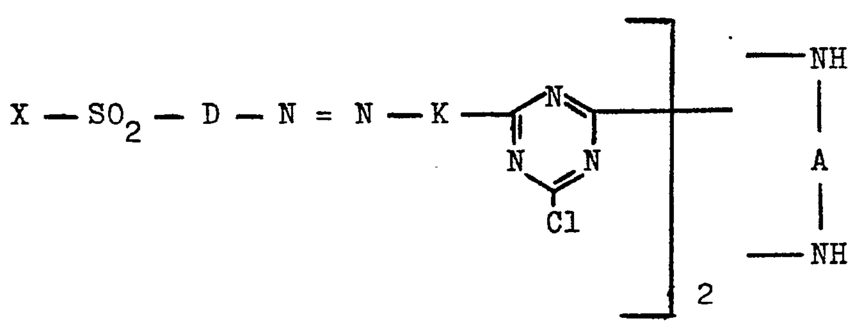
(5)

in which A, D, K and X have the meanings indicated for the formula (1) in claim 1, with nicotinic acid or nicotinamide, or coupling a compound of the general formula (6)

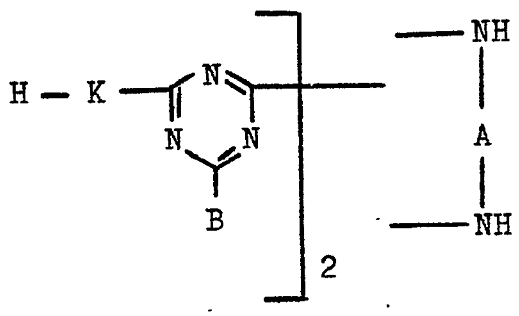

(6)

in which A, B and K have the meanings indicated in claim 1, with the diazonium compound of an aromatic amine of the general formula (7)

$X\text{-}SO_2\text{-}D\text{-}NH_2$(7)

in which D and X have the meanings indicated in claim 1.

10. Use of a compound of the general formula (1), as a dye.

11. The use as claimed in claim 10, for dyeing hydroxyl and/or carboxyamido-containing material, preferably fiber material.

12. The use as claimed in claim 11, wherein the fiber material is a cellulose fiber/polyester fiber mixture or a cellulose fibre/cellulose acetate fiber mixture.

13. A process for dyeing hydroxyl-containing fiber material, preferably cellulose fiber material, wherein a compound of claim 1 is applied to the material in an aqueous solution and allowed to act on the material from the aqueous solution at a pH value between 4 and 8, preferably at a pH value between 5 and 7.5, and at a temperature between 100 and 150°C and fixed on the material.

14. The process as claimed in claim 13, wherein the fiber material used is a cellulose fiber/polyester fiber mixture or a cellulose fiber/cellulose triacetate fiber mixture.

15. The process as claimed in claim 14, wherein a disperse dye is additionally present.

**Claims for the Contracting State ES**

1. A process for the preparation of a disazo compound which conforms to the general formula (1),

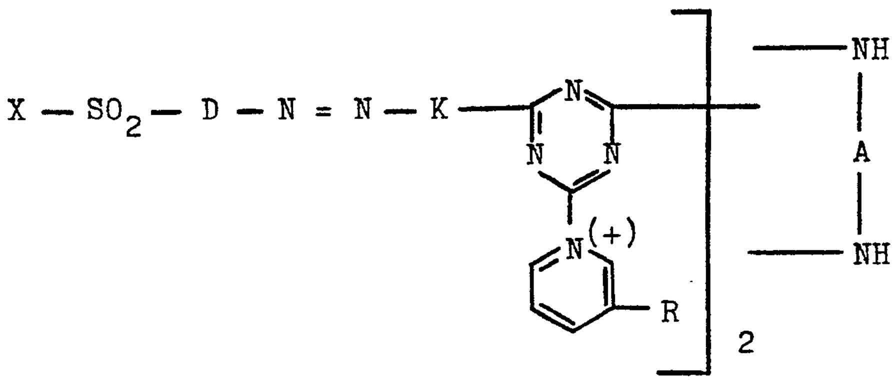

(1)

in which
A is a phenylene radical which can be substituted by 1 or 2 substituents from the group consisting of methyl, ethyl, methoxy, chlorine and sulfo, or
A is a radical of the general formula (2a)

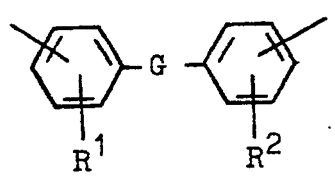

(2a)

in which

G is a direct bond or a vinylidene radical of the formula –CH=CH– or a bivalent urea radical of the formula –NH–CO–NH–,
R1 denotes a hydrogen atom or a sulfo, methyl, ethyl, methoxy or ethoxy group and
$R^2$ has one of the meanings of $R^1$ and is identical to $R^1$ or different from $R^1$;
D is a benzene ring which can be substituted by 1 or 2 substituents which are selected from the set consisting of 2 methyl groups, 2 ethyl groups, 2 methoxy groups, 2 ethoxy groups, 1 sulfo group, 1 carboxyl group, 1 chlorine atom and 1 bromine atom, or
D is a naphthalene ring which can be substituted by a sulfo group, or
D is a group of the formula (2b)

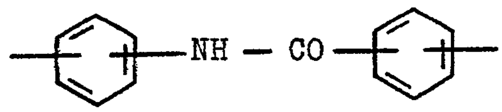
(2b);

K, as a radical of a coupling component, is an aminonaphtholsulfonic acid radical of the general formula (3) or an aniline radical of the general formula (4)

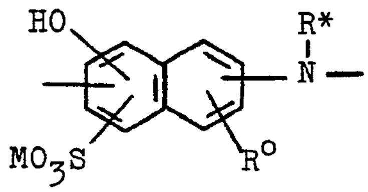
(3),

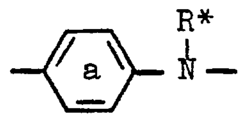
(4)

in which
M stands for a hydrogen atom or an alkali metal,
R° is a hydrogen atom or a sulfo group,
the free azo bond in the formula (3) is ortho to the hydroxyl group,
R* is a hydrogen atom or a methyl group or an ethyl group and
the benzene nucleus a can be substituted by 1 or 2 substituents from the group consisting of methyl, ethyl, methoxy, ethoxy, alkanoylamino of 2 to 5 carbon atoms, benzoylamino, ureido and chlorine;
X is a vinyl group, a β-sulfatoethyl or a β-chloroethyl group;
R is a carboxyl group or a carboxamido group;
the sulfo, sulfato and carboxyl groups form anions equivalent to the pyridinium cation, which comprises reacting a compound of the general formula (5)

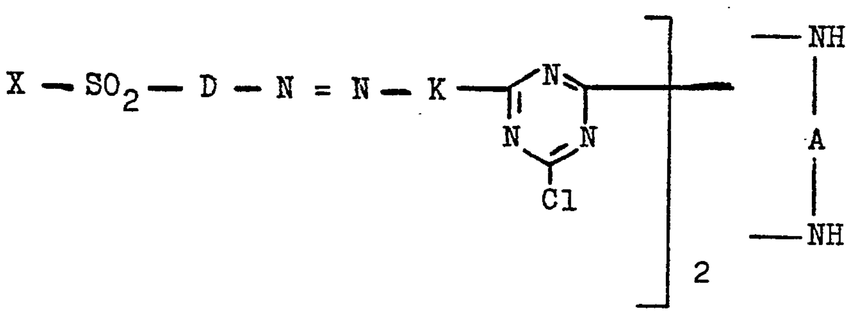
(5)

in which A, D, K and X have the meanings indicated above for the formula (1), with nicotinic acid or nicotinamide, or coupling a compound of the general formula (6)

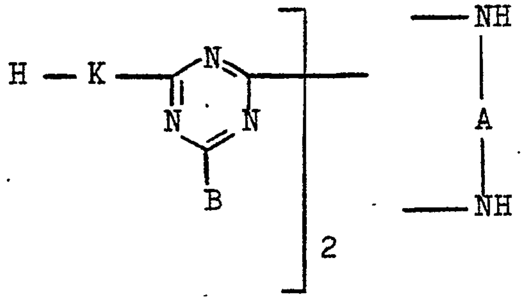

(6)

in which A, B and K have the meanings indicated above, with the diazonium compound of an aromatic amine of the general formula (7)

$X-SO_2-D-NH_2$(7)

in which D and X have the meanings indicated above.

2. The process as claimed in claim 1, wherein K is a radical of the general formula (3a) or (3b)

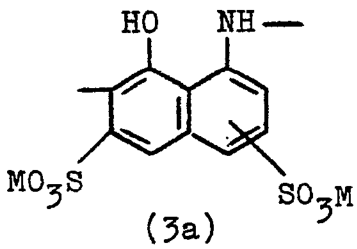

(3a)

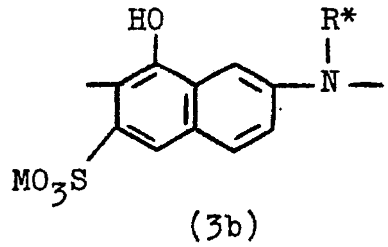

(3b)

in which M and R* have the meanings mentioned in claim 1 and the group in the formula (3a) is meta or para to the NH group.

3. The process as claimed in claim 1, wherein K is a radical of the general formula (3c)

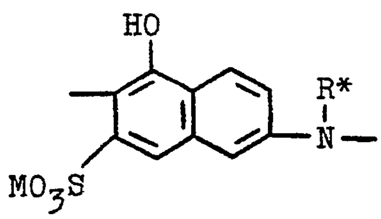

(3c)

in which M and R* have the meanings mentioned in claim 1.

4. The process as claimed in claim 1, wherein K is a radical of the general formula (4)

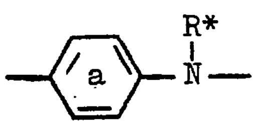

(4)

in which R* and a have the meanings mentioned in claim 1.

5. The process as claimed in at least one of claims 1 to 4, wherein A is a para-phenylene radical or a sulfo-substituted para-phenylene radical or a 2,2'- or 3,3'-disulfodiphen-4,4'-ylene radical or a radical of the formula (2c) or (2d)

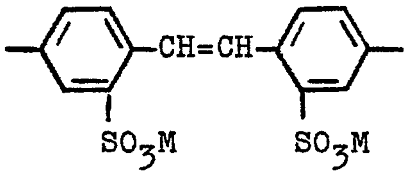 (2c) 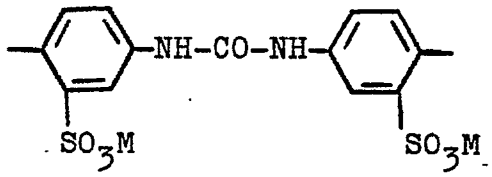 (2d)

in which M has the meaning mentioned in claim 1.

6. The process as claimed in any one of claims 1 to 5, wherein K denotes a radical of the general formula (3e)

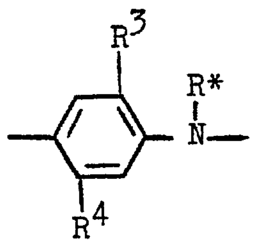 (3e)

in which $R^3$ is hydrogen atom or a methyl or methoxy group and $R^4$ denotes a methyl, methoxy, acetylamino or ureido group.

7. The process as claimed in at least one of claims 1 to 6, wherein D deontes a benzene ring which can be substituted by 1 or 2 substituents selected from the set consisting of 2 methoxy groups, 1 methyl group, 1 chlorine atom and 1 bromine atom, or denotes a naphthalene ring which can be substituted by a sulfo group.

8. The process as claimed in at least one of claims 1 to 7, wherein X is a β-sulfatoethyl group.

9. Use of a compound of the general formula (1) or of a disazo compound prepared as claimed in at least one of claims 1 to 8, as a dye.

10. The use as claimed in claim 9, for dyeing hydroxyl- and/or carboxamido-containing material, preferably fiber material.

11. The use as claimed in claim 10, wherein the fiber material is a cellulose fiber/polyester fiber mixture or a cellulose fibre/cellulose acetate fiber mixture.

12. A process for dyeing hydroxy-containing fiber material, preferably cellulose fiber material, wherein a disazo compound of claim 1 or a disazo compound prepared as claimed in at least one of claims 1 to 8 is applied to the material in an aqueous solution and allowed to act on the material from the aqueous solution at a pH value between 4 and 8, preferably at a pH value between 5 and 7.5, and at a temperature between 100 and 150°C and fixed on the material.

13. The process as claimed in claim 12, wherein the fiber material used is a cellulose fiber/polyester fiber mixture or a cellulose fiber/cellulose triacetate fiber mixture.

14. The process as claimed in claim 13, wherein a disperse dye is additionally present.

**Revendications pour les Etats Contractants: BE, CH, DE, FR, GB, IT, LI**

1. Composé disazoïque répondant à la formule générale (1)

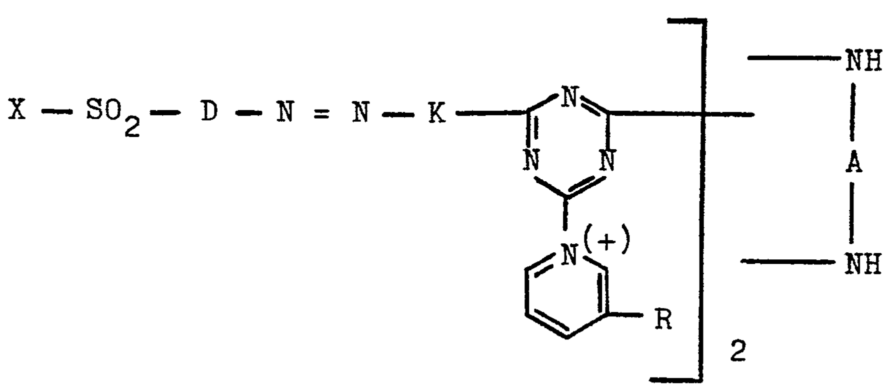 (1)

dans laquelle
A représente un reste phénylène, qui peut être substitué par un ou deux substituants choisis parmi le groupe méthyle, éthyle, méthoxy, chloro et sulfo, ou bien, A représente un reste répondant à la formule générale (2a)

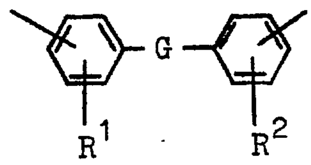

(2a)

dans laquelle
G représente une liaison directe ou le reste vinylidène de formule –CH=CH– ou le reste divalent urée de formule –NH–CO–NH–,
$R^1$ représente un atome d'hydrogène, un groupe sulfo, méthyle, éthyle, méthoxy ou éthoxy, et
$R^2$ a l'un des sens de $R^1$ et peut être identique à $R^1$ ou en différer;
D représente un noyau benzénique, qui peut être substitué par un ou deux substituants choisis parmi deux groupes méthyles, deux groupes éthyles, deux groupes méthoxy, deux groupes éthoxy, un groupe sulfo, un groupe carboxy, un atome de chlore et un atome de brome, ou bien
D représente un noyau naphtalénique, qui peut être substitué par un groupe sulfo, ou bien
D représente un groupe de formule (2b)

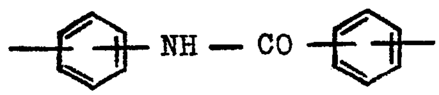

(2b);

K représente un reste d'un copulant qui est un reste d'acide amino naphtol sulfonique de formule générale (3) ou un reste aniline de formule générale (4)

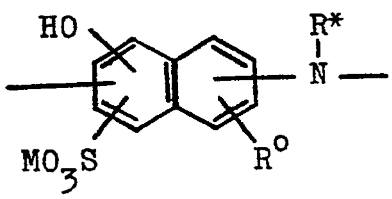

(3),

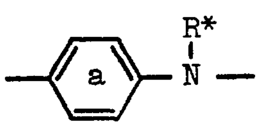

(4)

formules dans lesquelles
M représente un atome d'hydrogène ou un métal alcalin,
R° représente un atome d'hydrogène ou un groupe sulfo,
la liaison azoïque libre dans la formule (3) est en ortho par rapport au groupe hydroxyle,
R* représente un atome d'hydrogène ou un groupe méthyle ou un groupe éthyle,
et le noyau benzénique a peut être substitué par un ou deux substituants choisis parmi le groupe méthyle, éthyle, méthoxy, éthoxy, alcanoylamino ayant 2 à 5 atomes de carbone, benzoylamine, uréido et chloro;
X représente le groupe vinyle, un groupe sulfato-2 éthyle ou chloro-2 éthyle;
R représente le groupe carboxyle ou le groupe carboxamide;
les groupes sulfo, sulfato et carboxy forment des anions qui équivalent aux cations pyridinium.

2. Composé disazoïque selon la revendication 1, caractérisé en ce que K représente un reste répondant à la formule générale (3a) ou (3b)

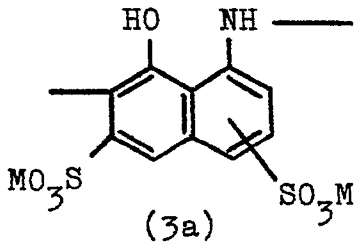

(3a)

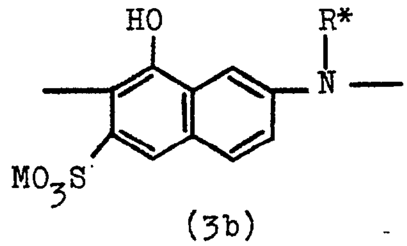

(3b)

dans lesquelles M et R* ont les sens indiqués à la revendication 1, et un groupe est dans la formule (3a) en position méta ou para par rapport au groupe NH.

3. Composé disazoïque selon la revendication 1, caractérisé en ce que K représente un reste de formule générale (3c)

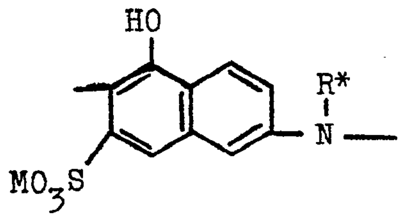

(3c)

dans laquelle M et R* ont les sens indiqués à la revendication 1.

4. Composé disazoïque selon la revendication 1, caractérisé en ce que K représente un reste répondant à la formule générale (4)

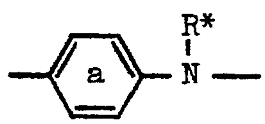

(4)

dans laquelle R* et a ont les sens indiqués à la revendication 1.

5. Composé disazoïque selon au moins l'une des revendications 1 à 4, caractérisé en ce que A représente le reste para-phénylène ou un reste para-phénylène substitué par un groupe sulfo, ou le reste disulfo-2,2' ou -3,3' diphénylène-4,4' ou un reste de formule (2c) ou (2d)

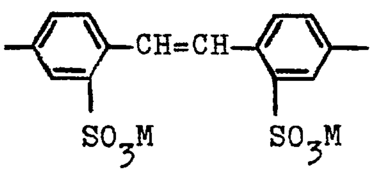

(2c)

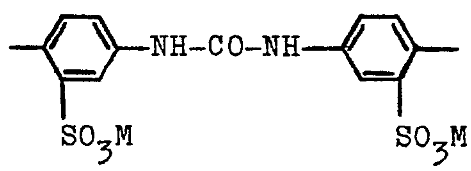

(2d)

dans lesquelles M a le sens indiqué à la revendication 1.

6. Composé selon l'une des revendications 1 et 5, caractérisé en ce que K représente un reste de formule générale (3e)

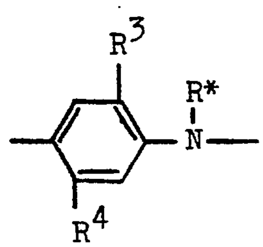

(3e)

dans laquelle $R^3$ représente un atome d'hydrogène ou le groupe méthyle ou méthoxy, et $R^4$ représente le groupe méthyle, méthoxy, acétylamino ou uréido.

7. Composé selon l'une au moins des revendications 1 à 6, caractérisé en ce que D représente un noyau benzénique pouvant être substitué par un ou deux substituants choisis parmi deux groupes méthoxy, un groupe méthyle, un atome de chlore et un atome de brome, ou bien il représente un noyau naphtalénique pouvant être substitué par un groupe sulfo.

8. Composé selon l'une au moins des revendications 1 à 7, caractérisé en ce que X représente un groupe sulfato-2 éthyle.

9. Procédé pour préparer un composé selon la revendication 1, caractérisé en ce qu'on fait réagir un composé de formule générale (5)

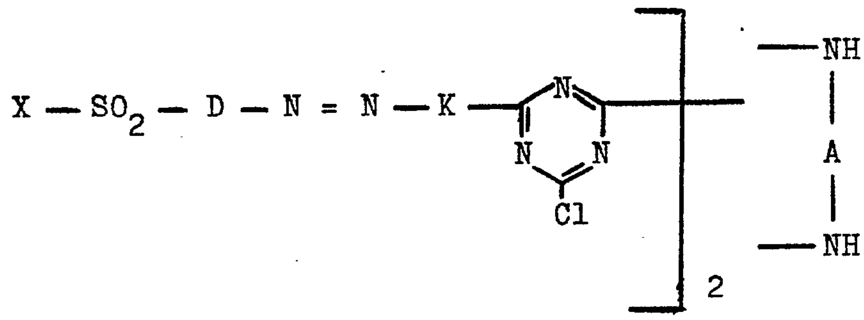

(5)

(dans laquelle A, D, K et X ont les sens indiqués pour la formule (1) dans la revendication 1) avec l'acide nicotinique ou avec l'amide d'acide nicotinique, ou bien en ce qu'on copule un composé de formule générale (6)

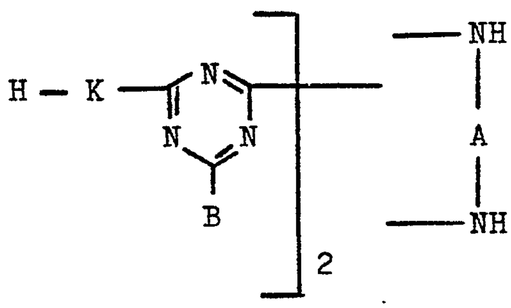

(6)

(dans laquelle A, B et K ont les sens indiqués à la revendication 1) avec le composé de diazonium d'une amine aromatique de formule générale (7)

$X{-}SO_2{-}D{-}NH_2$ (7)

dans laquelle D et X ont les sens indiqués à la revendication 1.

10. Utilisation d'un composé de formule générale (1) comme colorant.

11. Utilisation selon la revendication 10 pour teindre une matière contenant des groupes hydroxyles et/ou carboxamides, de préférence une matière fibreuse.

12. Utilisation selon la revendication 11, caractérisée en ce que la matière fibreuse est un mélange de fibres de cellulose et de fibres de polyester ou est un mélange de fibres de cellulose et de fibres d'acétate de cellulose.

13. Procédé pour teindre une matière fibreuse contenant des groupes hydroxyles, avantageusement une matière fibreuse cellulosique, procédé caractérisé en ce qu'on applique un composé selon la revendication 1 sur la matière, en solution aqueuse, et on le laisse agir sur la matière à partir de la solution aqueuse à un pH compris entre 4 et 8, avantageusement à un pH compris entre 5 et 7,5 et à une température comrise entre 100 et 150°C, et on fixe le composé sur la matière.

14. Procédé selon la revendication 13, caractérisé en ce qu'on utilise comme matière fibreuse un mélange de fibres de cellulose et de fibres de polyester ou bien un mélange de fibres de cellulose et de fibres de triacétate de cellulose.

15. Procédé selon la revendication 14, caractérisé en ce qu'on utilise en outre un colorant en dispersion.

**Revendications pour l'Etat Contractant ES**

1. Procédé pour préparer un composé disazoïque qui répond à la formule générale (1)

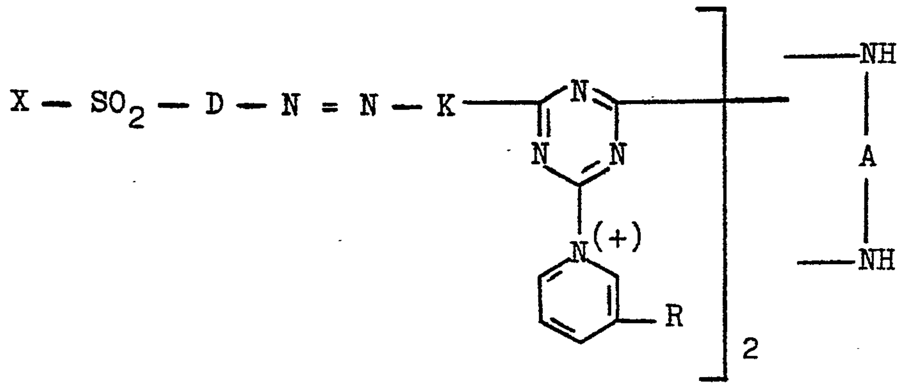

(1)

dans laquelle
A représente un reste phénylène, qui peut être substitué par un ou deux substituants choisis parmi le groupe méthyle, éthyle, méthoxy, chloro et sulfo, ou bien, A représente un reste répondant à la formule générale (2a)

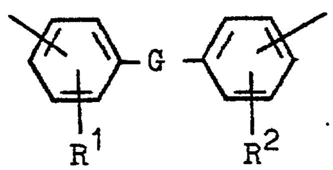

(2a)

dans laquelle
G représente une liaison directe ou le reste vinylidène de formule –CH=CH– ou le reste divalent urée de formule –NH–CO–NH–,
$R^1$ représente un atome d'hydrogène, un groupe sulfo, méthyle, éthyle, méthoxy ou éthoxy, et
$R^2$ a l'un des sens de $R^1$ et peut être identique à $R^1$ ou en être différent.
D représente un noyau benzénique, qui peut être substitué par un ou deux substituants choisis parmi deux groupes méthyles, deux groupes éthyles, deux groupes méthoxy, deux groupes éthoxy, un groupe sulfo, un groupe carboxy, un atome de chlore et un atome de brome, ou bien
D représente un noyau naphtalénique, qui peut être substitué par un groupe sulfo, ou bien
D représente un groupe de formule (2b)

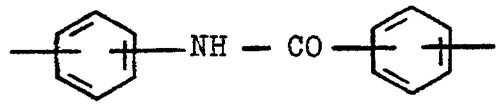

(2b);

K représente un reste d'un copulant qui est un reste d'acide amino naphtol sulfonique de formule générale (3) ou un reste aniline de formule générale (4)

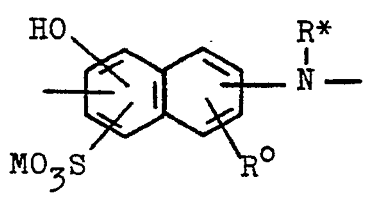

(3),

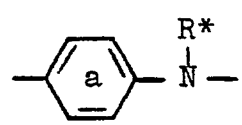

(4)

formules dans lequelles
M représente un atome d'hydrogène ou un métal alcalin,
R° représente un atome d'hydrogène ou un groupe sulfo,

la liaison azoïque libre dans la formule (3) est en ortho par rapport au groupe hydroxyle,
R* représente un atome d'hydrogène ou un groupe méthyle ou un groupe éthyle,
et le noyau benzénique a peut être substitué par un ou deux substituants choisis parmi le groupe méthyle, éthyle, méthoxy, éthoxy, alcanoylamino ayant 2 à 5 atomes de carbone, benzoylamino, uréido et chloro;
X représente le groupe vinyle, un groupe sulfato-2 éthyle ou chloro-2 éthyle;
R représente le groupe carboxyle ou le groupe carboxamide;
les groupes sulfo, sulfato et carboxy forment des anions qui équivalent aux cations pyridinium, procédé caractérisé en ce qu'on fait réagir un composé de formule générale (5)

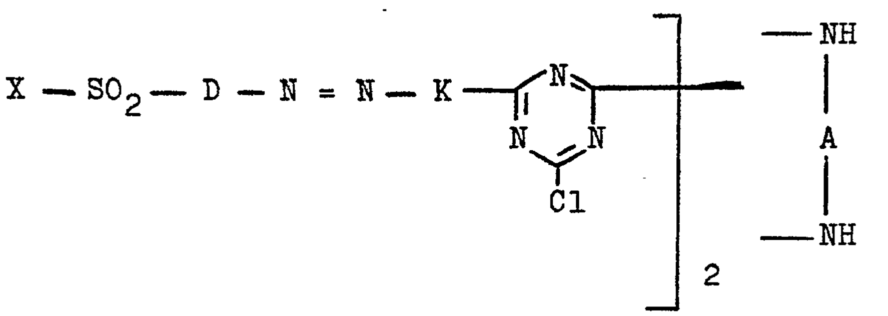

(5)

(dans laquelle A, D, K et X ont les sens indiqués pour la formule (1) dans la revendication 1) avec l'acide nicotinique ou avec l'amide d'acide nicotinique, ou bien en ce qu'on copule un composé de formule générale (6)

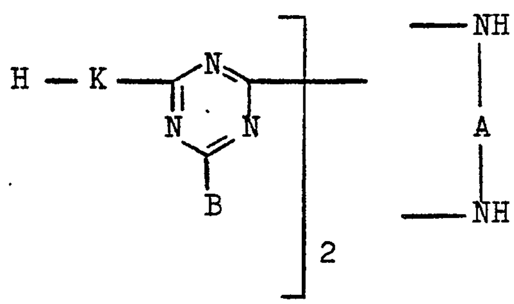

(6)

(dans laquelle A, B et K ont les sens indiqués ci-dessus) avec le composé de diazonium d'une amine aromatique de formule générale (7)

$X{-}SO_2{-}D{-}NH_2$ (7)

dans laquelle D et X ont les sens indiqués à la ci-dessus.

2. Procédé selon la revendication 1, caractérisé en ce que K représente un reste répondant à la formule générale (3a) ou (3b)

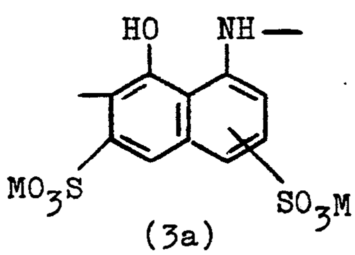

(3a)

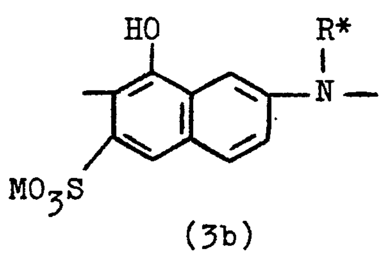

(3b)

dans lesquelles M et R* ont les sens indiqués à la revendication 1, et un groupe est dans la formule (3a) en position méta ou para par rapport au groupe NH.

3. Procédé selon la revendication 1, caractérisé en ce que K représente un reste de formule générale (3c)

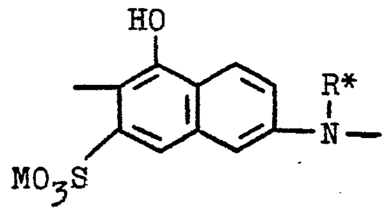

(3c)

dans laquelle M et R* ont les sens indiqués à la revendication 1.

4. Procédé selon la revendication 1, caractérisé en ce que K représente un reste de formule générale (4)

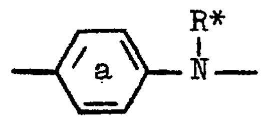

(4)

dans laquelle R* et a ont les sens indiqués à la revendication 1.

5. Procédé selon l'une au moins des revendications 1 à 4, caractérisé en ce que A représente le reste paraphénylène ou un reste para-phénylène substitué par un groupe sulfo, ou bien représente le reste disulfo-2,2' ou -3,3' diphénylène-4,4' ou un reste de formule (2c) ou (2d)

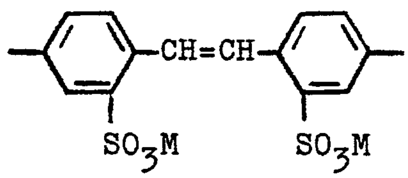

(2c)

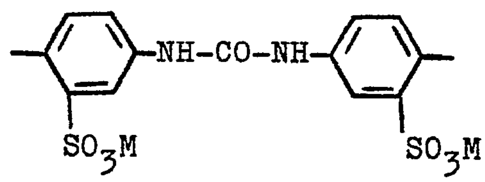

(2d

dans lesquelles M a le sens indiqué à la revendication 1.

6. Procédé selon l'une des revendications 1 et 5, caractérisé en ce que K représente un reste de formule générale (3e)

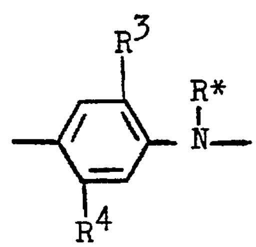

(3e)

dans laquelle $R^3$ représente un atome d'hydrogène ou le groupe méthyle ou méthoxy, et $R^4$ représente le groupe méthyle, méthoxy, acétylamino ou uréido.

7. Procédé selon l'une au moins des revendications 1 à 6, caractérisé en ce que D représente un noyau benzénique pouvant être substitué par un ou deux substituants choisis parmi deux groupes méthoxy, un groupe méthyle, un atome de chlore et un atome de brome, ou bien D représente un noyau naphtalénique pouvant être substitué par un groupe sulfo.

8. Procédé selon l'une au moins des revendications 1 à 7, caractérisé en ce que X représente un groupe sulfato-2 éthyle.

9. Utilisation d'un composé de formule générale (1) ou d'un composé disazoïque, préparé selon l'une au moins des revendications 1 à 8, comme colorant.

10. Utilisation selon la revendication 9 pour teindre de la matière, avantageusement de la matière fibreuse, contenant des groupes hydroxyles et/ou carboxyamides.

11. Utilisation selon la revendication 10, caractérisée en ce que la matière fibreuse est un mélange de fibres de cellulose et de fibres de polyester ou est un mélange de fibres de cellulose et de fibres d'acétate de cellulose.

12. Procédé pour teindre de la matière fibreuse contenant des groupes hydroxyles, avantageusement de la matière en fibres cellulosiques, procédé caractérisé en ce qu'on applique sur la matière, en solution aqueuse, un composé disazoïque selon la revendication 1 ou bien un composé disazoïque préparé selon l'une au moins des revendications 1 à 8, et on laisse ce composé agir sur la matière en solution aqueuse à un pH compris entre 4 et 8, avantageusement à un pH compris entre 5 et 7,5 et à une température comprise entre 100 et 150°C, et l'on fixe le composé sur la matière.

13. Procédé selon la revendication 12, caractérisé en ce qu'on utilise comme matière fibreuse un mélange de fibres de cellulose et de fibres de polyester ou un mélange de fibres de cellulose et de fibres de triacetate de cellulose.

14. Procédé selon la revendication 13, caractérisé en ce qu'on utilise en outre un colorant en dispersion.